(19)

**Europäisches Patentamt**
**European Patent Office**
**Office européen des brevets**

(11) **EP 4 614 630 A1**

(12) **EUROPEAN PATENT APPLICATION**
published in accordance with Art. 153(4) EPC

(43) Date of publication:
**10.09.2025   Bulletin 2025/37**

(21) Application number: **22964717.7**

(22) Date of filing: **08.11.2022**

(51) International Patent Classification (IPC):
***H01M 8/02*** (2016.01)

(52) Cooperative Patent Classification (CPC):
**H01M 8/02;** Y02E 60/10

(86) International application number:
**PCT/CN2022/130553**

(87) International publication number:
**WO 2024/098241 (16.05.2024 Gazette 2024/20)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Xiamen Ampack Technology Limited**
**Xiamen City, Fujian Province, 361000 (CN)**

(72) Inventors:
• **NONG, Wenbin**
  **Xiamen, Fujian 361000 (CN)**
• **LI, Kunlong**
  **Xiamen, Fujian 361000 (CN)**
• **WANG, Pengfei**
  **Xiamen, Fujian 361000 (CN)**

(74) Representative: **Icosa**
**83 avenue Denfert-Rochereau**
**75014 Paris (FR)**

(54) **ELECTROCHEMICAL APPARATUS, ELECTRIC DEVICE, AND MANUFACTURING METHOD FOR ELECTROCHEMICAL APPARATUS**

(57)     An electrochemical apparatus (100), an electric device (200), and a manufacturing method for the electrochemical apparatus (100). **In** the electrochemical apparatus (100), N battery cells are divided into M battery cell groups (10), battery cells (1) in each battery cell group (10) are arranged in a first direction, and the M battery cell groups (10) are arranged in the first direction; each battery cell (1) comprises a battery cell housing (11) and two electrode terminals (12); in the first direction, electrode terminals (12) of two adjacent battery cell groups (10) are connected by means of conductive members (24), and connection areas (25) are formed on the conductive members (24); in a second direction, each battery cell group (10) comprises a first side and a second side arranged opposite to each other; a first fixing member (21) is bonded to at least part of an electrode terminal (12) on the first side of the battery cell group (10), and at least one first fixing member (21) is bonded to at least part of a connection area (25); and/or a second fixing member (22) is bonded to at least part of an electrode terminal (12) on the second side of the battery cell group (10), and at least one second fixing member (22) is bonded to at least part of a connection area (25).

FIG. 1

# Description

## TECHNICAL FIELD

The embodiments of this application relate to the technical field of electrochemistry, and in particular to an electrochemical apparatus, an electric device, and a manufacturing method for the electrochemical apparatus.

## BACKGROUND

At present, multiple battery cells are usually connected by means of electrode terminals in an electrochemical apparatus. During use and transport of the electrochemical apparatus, connections of the electrode terminals may be deformed due to stress, which affects use of the electrochemical apparatus.

## SUMMARY

In order to solve the above problem, the embodiments of this application provide an electrochemical apparatus, an electric device, and a manufacturing method for the electrochemical apparatus to alleviate the above problem.

According to a first aspect of this application, an electrochemical apparatus is provided, including: N battery cells, M first fixing members, M second fixing members and M-1 conductive members, where N and M are both positive integers and satisfy $2 \leq M \leq N$; the N battery cells are divided into M battery cell groups, each battery cell group includes at least one battery cell, the battery cells in the battery cell groups are arranged along a first direction, and the M battery cell groups are arranged along the first direction; the battery cell includes a battery cell housing and two electrode terminals, and the two electrode terminals are arranged opposite each other on two sides of the battery cell housing along a second direction, where the second direction is the direction in which the first fixing members and the second fixing members are arranged opposite each other, and the second direction is perpendicular to the first direction; along the first direction, the electrode terminals of two adjacent battery cell groups are connected by means of the conductive member, and a connection area is formed on the conductive member; and along the second direction, the battery cell group includes a first side and a second side which are arranged opposite each other, where the first fixing member is bonded to at least part of the electrode terminal on the first side of the battery cell group, and at least one first fixing member is bonded to at least part of the connection area, and/or the second fixing member is bonded to at least part of the electrode terminal on the second side of the battery cell group, and at least one second fixing member is bonded to at least part of the connection area.

In the above electrochemical apparatus, the first fixing member is bonded to at least part of the electrode terminal on the first side of the battery cell group, and at least one first fixing member is bonded to at least part of the connection area, which is conducive to protecting the electrode terminal and the conductive member, and providing protection of the connection area, which improves the stability of the electrochemical apparatus. The second fixing member is bonded to at least part of the electrode terminal on the second side of the battery cell group, and at least one second fixing member is bonded to at least part of the connection area, which is conducive to improving protection of the electrode terminal and the conductive member, and protection of the connection areas formed on the electrode terminal and the conductive member, thereby improving the stability of the electrochemical apparatus.

In some embodiments of this application, at least one battery cell group includes a plurality of battery cells, and on the first side of the battery cell group, the electrode terminals of each of the plurality of battery cells are connected to each other; and/or at least one battery cell group includes a plurality of battery cells, and on the second side of the battery cell group, the electrode terminals of each of the plurality of battery cells are connected to each other. The battery cell group includes a plurality of battery cells, which is conducive to forming series connection or parallel connection between the adjacent battery cell groups.

In some embodiments of this application, at least one battery cell group includes a plurality of battery cells, and on the first side of the battery cell group, at least one electrode terminal of each of the plurality of battery cells is connected by welding; and/or at least one battery cell group includes a plurality of battery cells, and on the second side of the battery cell group, at least one electrode terminal of each of the plurality of battery cells is connected by welding, which is conducive to improving the stability of connection among the plurality of battery cells.

In some embodiments of this application, at least one battery cell group includes a plurality of battery cells, and on the first side of the battery cell group, at least one electrode terminal of at least one of the plurality of battery cells is bent; and/or at least one battery cell group includes a plurality of battery cells, and on the second side of the battery cell group, at least one electrode terminal of at least one of the plurality of battery cells is bent, which is conducive to improving space utilization when the plurality of battery cells are connected to each other.

In some embodiments of this application, the electrochemical apparatus further includes resilient members; and each resilient member is arranged between two adjacent battery cell groups, and the resilient member is in contact with at least one of the two battery cell groups. The resilient member is conducive to providing a deformation space for the expanded battery cell.

In some embodiments of this application, the thickness of the resilient member that is not compressed by the battery cell is T1, the distance formed in the first direction between two adjacent battery cell groups in the first direction is T2, the thickness of the battery cell that is not subjected to a charge-discharge cycle is T3, and half of the sum of numbers of the battery cells in two adjacent cell groups along the first direction is X, where T1, T2, T3 and X satisfy: $T2 - X * T3 * 20\% \leq T1 \leq T2$. The resilient member is conducive to providing a deformation space and support when the battery cell expands, thereby being conducive to reducing the risk of damage to the battery cell and prolonging the service life of the electrochemical apparatus.

In some embodiments of this application, the first fixing member includes a first sleeve, and along the first direction, the wall thickness of the first sleeve is greater than or equal to 1 mm and less than or equal to 5 mm; and/or the second fixing member includes a second sleeve, and along the first direction, the wall thickness of the second sleeve is greater than or equal to 1 mm and less than or equal to 5 mm, which is conducive to improving the protective effect on the electrode terminals.

In some embodiments of this application, in two adjacent battery cell groups, the first fixing member of one of the battery cell groups is connected to the second fixing member of the other of the battery cell groups, and a distance is formed between the first fixing member and the second fixing member in the first direction. A distance is also formed between two adjacent battery cell groups, which is conducive to improving heat dissipation of the battery cell groups, thereby improving heat dissipation of the electrochemical apparatus.

In some embodiments of this application, along the first direction, one of the first fixing member and the second fixing member is provided with a concave portion, and a distance is formed between the first fixing member and the second fixing member by means of the concave portion.

In some embodiments of this application, along the first direction, the other of the first fixing member and the second fixing member is provided with a concave portion, the length of the convex portion along the first direction is greater than the length of the concave portion along the first direction, and a distance is formed between the first fixing member and the second fixing member by fitting the convex portion with the concave portion.

In the above electrochemical apparatus, along the first direction, the length of the convex portion is greater than the length of the concave portion, the convex portion is fitted with the concave portion, the distance is formed between the first fixing member and the second fixing member, and the distance is also formed between adjacent battery cell groups, which is conducive to improving heat dissipation of the battery cell groups, thereby improving heat dissipation of the electrochemical apparatus.

In some embodiments of this application, the battery cell further includes an electrode assembly, the electrode assembly is arranged inside the battery cell housing, and the two electrode terminals are connected to the electrode assembly and extend out of the battery cell housing; in the same battery cell group, along the first direction, a projection of the first fixing member is separated from a projection of the electrode assembly of the battery cell in the battery cell group; and/or in the same battery cell group, along the first direction, a projection of the second fixing member is separated from a projection of the electrode assembly of the battery cell in the battery cell group.

In the above electrochemical apparatus, in the same battery cell group, along the first direction, the projections of the first fixing member and the second fixing member are both separated from the projection of the electrode assembly, which is conducive to reducing the influence on expansion of the electrode assembly and prolonging the service life of the electrochemical apparatus.

In some embodiments of this application, at least one first fixing member is formed on the first side of the battery cell group and at least part of the connection area by means of an injection molding process; and/or at least one second fixing member is formed on the second side of the battery cell group and at least part of the connection area by means of the injection molding process, which is conducive to improving protection of the connection areas formed on the electrode terminal and the conductive member.

In some embodiments of this application, the first fixing member covers the part of the electrode terminal located outside the battery cell housing and at least part of the battery cell housing; and/or the second fixing member covers the part of the electrode terminal located outside the battery cell housing and at least part of the battery cell housing, which is conducive to improving protection of the electrode terminal and the battery cell.

In some embodiments of this application, the first fixing member is provided with at least one first through hole, and the first through hole penetrates the first fixing member along a third direction; and/or the second fixing member is provided with at least one first through hole, and the first through hole penetrates the second fixing member along the third direction, where the third direction is perpendicular to the first direction and the second direction, which is conducive to heat dissipation at the electrode terminals bonded to the first fixing member and/or the second fixing member, thereby improving heat dissipation of the electrochemical apparatus.

In some embodiments of this application, the electrochemical apparatus further includes a shell; the shell includes a third wall surface and a fourth wall surface which are arranged opposite each other along the third direction; and a second through hole is provided on the third wall surface and/or the fourth wall surface, and the second through hole is in communication with the first through hole. This arrangement is conducive to further enhancing the heat dissipation effect of the electrochemical apparatus. According to a second aspect of this application, provided is an electrochemical apparatus, including: N battery cells, A first fixing members, A second fixing members and (L-1)*A third fixing members, where N, M and L are all positive integers and satisfy $2 \leq M \leq N$ and $L \geq 2$; the N battery cells are divided into M battery cell groups, the M battery cell groups are divided into A rows and L columns, and along a second direction, the battery cell group includes a first side and a second side which are arranged opposite each other; each of the battery cell groups includes at least one battery cell, the battery cells in the battery cell groups are arranged along a first direction, and the second direction is perpendicular to the first direction; the battery cell includes a battery cell housing and two electrode terminals, and the two electrode terminals are arranged opposite each other on two sides of the battery cell housing along the second direction, where in a row of battery cell groups, the first fixing member is located on the first side of the first battery cell group in this row of battery cell groups, and is bonded to at least part of the electrode terminal on the first side of the first battery cell group; the second fixing member is located on the second side of the last battery cell group in this row of battery cell groups, and is bonded to at least part of the electrode terminal on the second side of the last battery cell group; and in a row of battery cell groups, the electrode terminals of two adjacent battery cell groups are connected, the third fixing member is connected to the two adjacent battery cell groups, respectively, the third fixing member is bonded to at least part of the electrode terminal on the second side of one of the two adjacent battery cell groups, and the third fixing member is bonded to at least part of the electrode terminal on the first side of the other of the two adjacent battery cell groups.

In the above electrochemical apparatus, the first fixing members, the second fixing members and the third fixing members are conducive to strengthening protection of the electrode terminals of the battery cell groups, which improves the stability of the electrochemical apparatus and prolonging the service life thereof.

In some embodiments of this application, the A rows of battery cell groups are stacked in the first direction; the electrochemical apparatus further includes A-1 conductive members; and in two adjacent rows of battery cell groups, the electrode terminal on the first side of the first battery cell group in one row of battery cell groups is connected to the electrode terminal on the second side of the first battery cell group in the other row of battery cell groups by means of the conductive member, a connection area is formed on the conductive member, at least one of the first fixing members is bonded to at least part of the connection area, and/or at least one of the second fixing members is bonded to at least part of the connection area, which is conducive to improving protection of the connection areas formed on the electrode terminal and the conductive member, thereby improving the stability of the electrochemical apparatus.

In some embodiments of this application, in two adjacent battery cell groups in the same row of battery cell groups, the electrode terminal on the second side of one battery cell group and the electrode terminal on the first side of the other battery cell group are connected to each other by welding, which is conducive to improving the stability of connection between the adjacent battery cell groups.

In some embodiments of this application, at least one battery cell group includes a plurality of battery cells, and on the first side of the battery cell group, the electrode terminals of at least one of the plurality of battery cells are bent; and/or at least one battery cell group includes a plurality of battery cells, and on the second side of the battery cell group, the electrode terminals of at least one of the plurality of battery cells are bent, which is conducive to improving space utilization when the plurality of battery cells are connected to each other.

In some embodiments of this application, the electrochemical apparatus further includes resilient members; and each resilient member is arranged between two adjacent battery cell groups in the same column of battery cell groups, and the resilient member is in contact with at least one of the two battery cell groups. The resilient member is conducive to providing a deformation space for the expanded battery cell.

In some embodiments of this application, the thickness of the resilient member that is not compressed by the battery cell is T1, the distance formed in the first direction between two adjacent battery cell groups in the same column of battery cell groups is T2, the thickness of the battery cell that is not subjected to a charge-discharge cycle is T3, and half of the sum of numbers of the battery cells in two adjacent cell groups battery cell groups in the same column of battery cell groups is X, where T1, T2, T3 and X satisfy: $T2-X * T3 * 20\% \leq T1 \leq T2$. The resilient member is conducive to providing a deformation space and support when the battery cell expands, thereby being conducive to reducing the risk of damage to the battery cell and prolonging the service life of the electrochemical apparatus.

In some embodiments of this application, the first fixing member includes a first sleeve, and along the first direction, the wall thickness of the first sleeve is greater than or equal to 1 mm and less than or equal to 5 mm; and/or the second fixing member includes a second sleeve, and along the first direction, the wall thickness of the second sleeve is greater than or equal to 1 mm and less than or equal to 5 mm; and/or the third fixing member includes a third sleeve and a fourth sleeve, and along the first direction, the wall thickness of the third sleeve is greater than or equal to 1 mm and less than or equal to 5 mm, and the wall thickness of the fourth sleeve is greater than or equal to 1 mm and less than or equal to 5 mm, which is conducive to improving the protective effect on the electrode terminals.

In some embodiments of this application, at least one first fixing member is formed on the first side of the first battery cell group in the row of battery cell groups and at least part of the connection area by means of an injection molding process; and/or at least one second fixing member is formed on the second side of the last battery cell group in the row of battery cell groups and at least part of the connection area by means of the injection molding process; and/or in two adjacent battery cell groups in a row of battery cell groups, at least one third fixing member is formed on the second side of one battery cell group and the first side of the other battery cell group by means of the injection molding process, which is conducive to improving protection of the connection areas formed on the electrode terminal and the conductive member, and improving protection when the electrode terminals are connected, thereby improving the stability of the electrochemical apparatus.

In some embodiments of this application, the first fixing member covers the part of the electrode terminal located outside the battery cell housing and at least part of the battery cell housing; and/or the second fixing member covers the part of the electrode terminal located outside the battery cell housing and at least part of the battery cell housing; and/or the third fixing member covers the part of the electrode terminal located outside the battery cell housing and at least part of the battery cell housing, which is conducive to improving protection of the electrode terminal and the battery cell.

In some embodiments of this application, the first fixing member is provided with at least one first through hole, and the first through hole penetrates the first fixing member along a third direction; and/or the second fixing member is provided with at least one first through hole, and the first through hole penetrates the second fixing member along the third direction; and/or the third fixing member is provided with at least one first through hole, and the first through hole penetrates the third fixing member along the third direction, where the third direction is perpendicular to the first direction and the second direction, which is conducive to heat dissipation at the electrode terminals bonded to the first fixing member and/or the second fixing member and/or the third fixing member, thereby improving heat dissipation of the electrochemical apparatus.

In some embodiments of this application, along the first direction, in two adjacent battery cell groups, the first fixing member of one of the battery cell groups is connected to the second fixing member of the other of the battery cell groups, and a distance is formed between the first fixing member and the second fixing member in the first direction; and/or along the first direction, in two adjacent battery cell groups, the third fixing member of one of the battery cell groups is connected to the third fixing member of the other of the battery cell groups, and a distance is formed between the two third fixing members in the first direction, which is conducive to improving heat dissipation of the battery cell groups, thereby improving heat dissipation of the electrochemical apparatus.

In some embodiments of this application, the battery cell further includes an electrode assembly, the electrode assembly is arranged inside the battery cell housing, and the two electrode terminals are connected to the electrode assembly and extend out of the battery cell housing; in the same battery cell group, along the first direction, a projection of the first fixing member is separated from a projection of the electrode assembly of the battery cell in the battery cell group; and/or in the same battery cell group, along the first direction, a projection of the second fixing member is separated from the projection of the electrode assembly of the battery cell in the battery cell group; and/or in the same row of battery cell groups, along the first direction, a projection of the third fixing member between two adjacent battery cell groups is separated from projections of the electrode assemblies of the battery cells in the two battery cell groups, which is conducive to reducing the influence on expansion of the electrode assemblies and prolonging the service life of the electrochemical apparatus.

In some embodiments of this application, the electrochemical apparatus further includes a shell, and the shell includes a third wall surface and a fourth wall surface which are arranged opposite each other along a third direction; and a second through hole is provided on the third wall surface and/or the fourth wall surface, and the second through hole is in communication with the first through hole. This arrangement is conducive to further enhancing the heat dissipation effect of the electrochemical apparatus.

According to a third aspect of the embodiments of this application, provided is an electric device, including: the electrochemical apparatus provided in any one of the foregoing first aspect or second aspect.

According to a preparation flow chart of the first aspect of the embodiments of this application, provided is a manufacturing method for an electrochemical apparatus. The method includes: step S101: connecting electrode terminals of two adjacent battery cell groups of M battery cell groups by means of a conductive member, and forming a connection area on the conductive member; step S102: providing a flowable insulating material on a first side of the battery cell group and at the conductive member, and after curing of the insulating material, bonding the connection area close to the first side of the battery cell group, the part of the electrode terminal located outside the battery cell housing and at least part of the battery cell housing to form a first fixing member; and step S103: providing the flowable insulating material on a second side of the battery cell group and at the conductive member, and after curing of the insulating material, bonding the connection area close to the second side of the battery cell group, the part of the electrode terminal located outside the battery cell housing and at least part of the battery cell housing to form a second fixing member.

According to a preparation flow chart of the second aspect of the embodiments of this application, provided is a manufacturing method for an electrochemical apparatus. The method includes: step S201: connecting electrode terminals of two adjacent battery cell groups in the same row of battery cell groups, providing a flowable insulating material on first sides and second sides of the two adjacent battery cell groups, and after curing of the insulating material, bonding the part of the electrode terminal located outside the battery cell housing and at least part of the battery cell housing to form a third fixing member; step S202: providing the flowable insulating material on a first side of the first battery cell group in this row of battery cell groups, and after curing of the insulating material, bonding the part of the electrode terminal located outside the battery cell housing and at least part of the battery cell housing to form a first fixing member; and S203: providing the flowable insulating material on a second side of the last battery cell group in this row of battery cell groups, and after curing of the insulating material, bonding the part of the electrode terminal located outside the battery cell housing and at least part of the battery cell housing to form a second fixing member.

According to a preparation flow chart of the second aspect of the embodiments of this application, the method further includes: step S204: providing M-1 conductive members, in two adjacent rows of battery cell groups, connecting the electrode terminal on the first side of the first battery cell group in one row of battery cell groups to the electrode terminal on the second side of the first battery cell group in the other row of battery cell groups by means of the conductive member, and forming a connection area on the conductive member; step S205: providing the flowable insulating material on the first side of the battery cell group and at the conductive member, and after curing of the insulating material, bonding the connection area close to the first side of the battery cell group; and step S206: providing the flowable insulating material on the second side of the battery cell group and at the conductive member, and after curing of the insulating material, bonding the connection area close to the second side of the battery cell group.

In the electrochemical apparatus of the first aspect of the embodiments of this application, the first fixing member is bonded to at least part of the electrode terminal on the first side of the battery cell group, and at least one first fixing member is bonded to at least part of the connection areas formed on the electrode terminal and the conductive member; and/or the second fixing member is bonded to at least part of the electrode terminal on the second side of the battery cell group, and at least one second fixing member is bonded to at least part of the connection areas formed on the electrode terminal and the conductive member. The first fixing members and the second fixing members are conducive to protecting the electrode terminals of the battery cells, and are conducive to giving play to the protective effect on the connection areas formed on the electrode terminals and the conductive members, thereby improving the stability of the electrochemical apparatus and prolonging the service life thereof.

In the electrochemical apparatus of the second aspect of the embodiments of this application, in a row of battery cell groups, the electrode terminals of two adjacent battery cell groups are connected, the third fixing member is bonded to at least part of the electrode terminal on the second side of one of the two adjacent battery cell groups, and the third fixing member is bonded to at least part of the electrode terminal on the first side of the other of the two adjacent battery cell groups. The first fixing member is bonded to at least part of the connection areas formed on the electrode terminal and the conductive member, and/or the second fixing member is bonded to at least part of the connection areas formed on the electrode terminal and the conductive member. The first fixing members, the second fixing members and the third fixing members are conducive to protecting the electrode terminals of the battery cells, and are conducive to giving play to the protective effect on the connection areas formed on the electrode terminals and the conductive members, thereby improving the stability of the electrochemical apparatus and prolonging the service life thereof.

## BRIEF DESCRIPTION OF DRAWINGS

In order to explain technical solutions in the embodiments of this application or in the prior art more clearly, drawings to be used in the description of embodiments or the prior art will be described briefly below. Apparently, the accompanying drawings in the following description show merely some embodiments recited in the embodiments of this application, and other drawings can be derived from these accompanying drawings by a person of ordinary skill in the art.

FIG. 1 is a schematic view of an optional electrochemical apparatus according to this application.
FIG. 2 is a schematic view of a battery cell arrangement of an optional electrochemical apparatus according to this application.
FIG. 3 is a schematic view of a battery cell arrangement of another optional electrochemical apparatus according to this application.
FIG. 4 is a schematic view of a connection method for electrode terminals of each battery cell in a battery cell group according to this application.
FIG. 5 is an optional schematic structural view of a battery cell according to this application.
FIG. 6 is an optional schematic structural view of a first fixing member according to this application.
FIG. 7 is an optional schematic structural view of a second fixing member according to this application.
FIG. 8 is an enlarged view at Q1 in FIG. 2.
FIG. 9 is a schematic view of this application showing that a length of a third structural member along a first direction is less than a length of a fourth structural member along the first direction.

FIG. 10 is a schematic view of this application showing that the length of a third structural member along a first direction is greater than the length of a fourth structural member along the first direction.

FIG. 11 is a sectional enlarged view at Q2 in FIG. 8.

FIG. 12 is an optional schematic structural view of a third wall surface of the electrochemical apparatus in FIG. 1.

FIG. 13 is an optional schematic structural view of the electrochemical apparatus in FIG. 1 after a fourth wall surface is removed.

FIG. 14 is a schematic view of yet another optional electrochemical apparatus according to this application.

FIG. 15 is a schematic view of a battery cell arrangement of yet another optional electrochemical apparatus according to this application.

FIG. 16 is a schematic view of the battery cell arrangement of yet another optional electrochemical apparatus according to this application.

FIG. 17 is a schematic view of connection between a second electrode terminal and a first electrode terminal according to this application.

FIG. 18 is another schematic view of a connection between a second electrode terminal and a first electrode terminal according to this application.

FIG. 19 is an enlarged view at Q4 in FIG. 17.

FIG. 20 is a schematic view of a position between a third fixing member and the electrode terminal according to this application.

FIG. 21 is an optional schematic structural view of the third fixing member according to this application.

FIG. 22 is an enlarged view at Q3 in FIG. 15.

FIG. 23 is a sectional enlarged view at Q5 in FIG. 22.

FIG. 24 is an optional schematic structural view of a third wall surface of the electrochemical apparatus in FIG. 14.

FIG. 25 is an optional schematic structural view of the electrochemical apparatus in FIG. 14 after a fourth wall surface is removed.

FIG. 26 is a schematic structural view of an optional electric device according to this application.

FIG. 27 is an optional flow chart of a manufacturing method for the electrochemical apparatus provided in a first aspect of this application.

FIG. 28 is an optional flow chart of a manufacturing method for the electrochemical apparatus provided in a second aspect of this application.

FIG. 29 is an optional flow chart of a manufacturing method for the electrochemical apparatus provided in a second aspect of this application.

List of reference numerals:

100 - electrochemical apparatus; 200 - electric device; 10 - battery cell group; 101 - first side of the battery cell group; 102 - second side of the battery cell group; 1 - battery cell; 11 - battery cell housing; 12 - electrode terminal; 1201 - first section; 1202 - second section; 13 - electrode assembly; 21 - first fixing member; 210 - first sleeve; 211 - first side of the first fixing member; 212 - second side of the first fixing member; 22 - second fixing member; 220 - second sleeve; 221 - first side of the second fixing member; 222 - second side of the second fixing member; 23 - third fixing member; 231 - third sleeve; 2311 - first side of third sleeve; 2312 - second side of third sleeve; 232 - fourth sleeve; 2321 - first side of the fourth sleeve; 2322 - second side of the fourth sleeve; 24 - conductive member; 25 - connection areas of the electrode terminal and the conductive member; 26 - distance between the first fixing member and the second fixing member; 27 - positive electrode connecting end; 28 - negative electrode connecting end; 29 - distance between adjacent third fixing members; 4 - shell; 401 - first wall surface; 402 - second wall surface; 403 - third wall surface; 404 - fourth wall surface; 41 - first convex portion; 42 - second concave portion; 43 - third convex portion; 44 - fourth concave portion; 45 - third convex portion; 46 - third concave portion; 47 - fourth convex portion; 48 - fourth concave portion; 5 - resilient member; 61 - first through hole; 62 - second through hole; 71 - fifth convex portion; F1 - first direction; F2 - second direction; F3 - third direction.

## DETAILED DESCRIPTION OF EMBODIMENTS

In order to make a person skilled in the art better understand the technical solutions in the embodiments of this application, the technical solutions in the embodiments of this application will be clearly and completely described below. Obviously, the described embodiments are only part of the embodiments of this application, not all of the embodiments. All other embodiments obtained by a person skilled in the art based on the embodiments of this application should fall in the scope of protection of the embodiments of this application.

The specific implementation of an electrochemical apparatus and an electric device of the embodiments of this application will be described below in conjunction with the drawings. It is hereby noted that, for the convenience of illustration in the following figures, the structures are not necessarily drawn according to actual proportions.

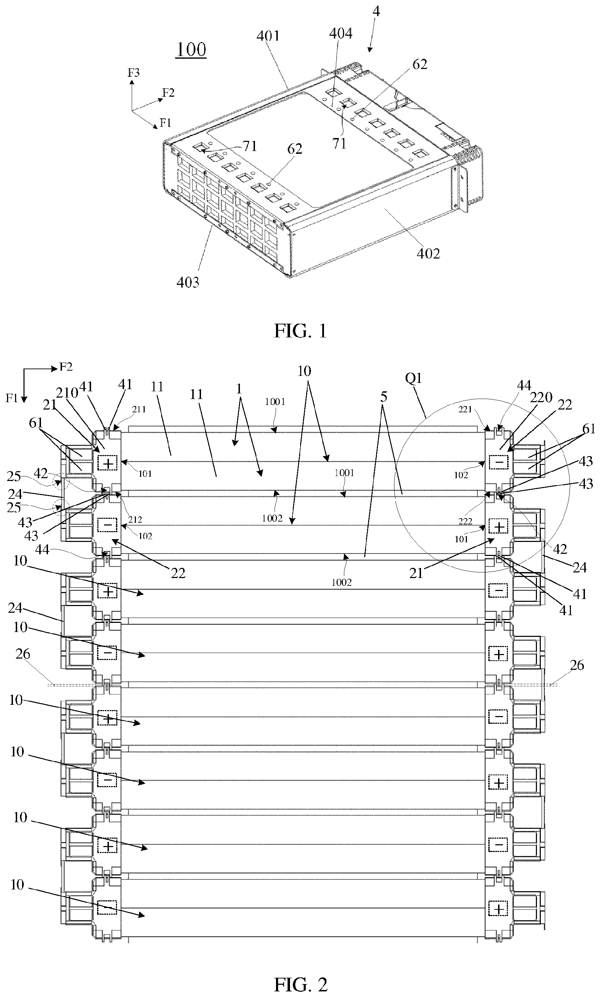

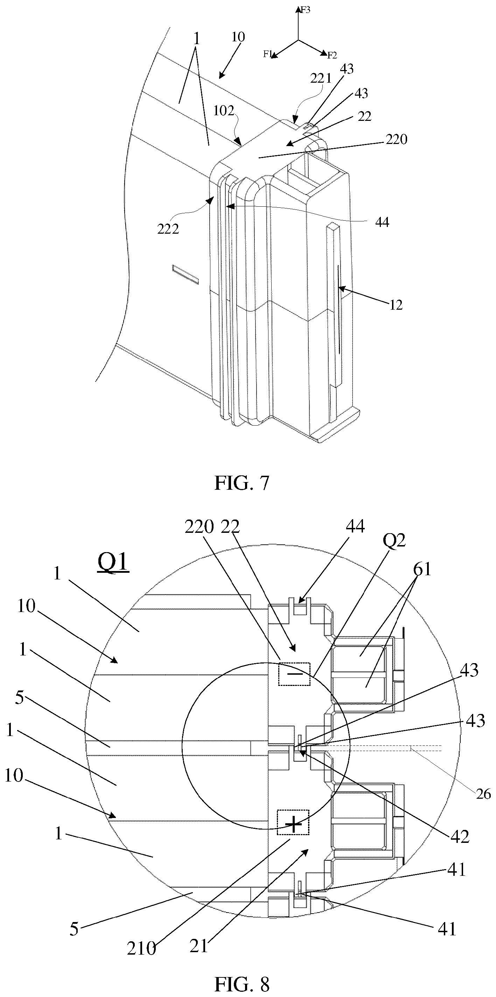

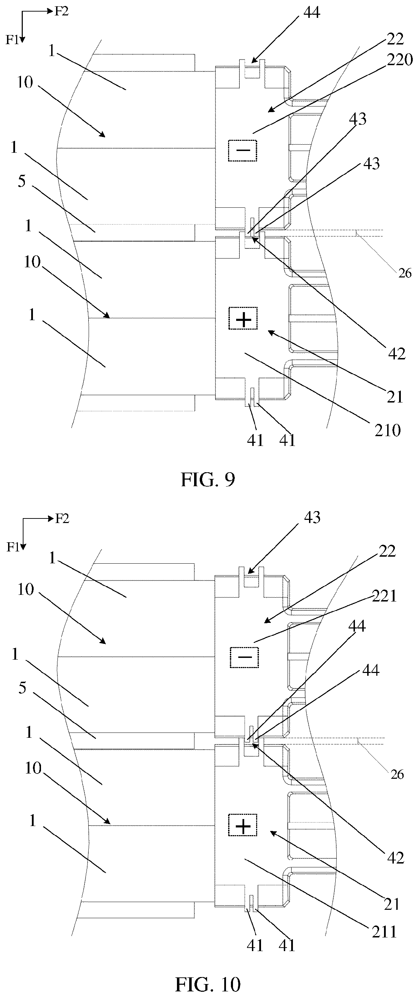

As shown in FIGS. 1 to 13, according to a first aspect of this application, an electrochemical apparatus 100 is provided, including N battery cells 1, M first fixing members 21, M second fixing members 22 and M-1 conductive members 24, where N and M are both positive integers and satisfy $2 \leq M \leq N$; the N battery cells 1 are divided into M battery cell groups 10, each battery cell group 10 includes at least one battery cell 1, the battery cells 1 in each battery cell group 10 are arranged along a first direction F1, and the M battery cell groups 10 are arranged along the first direction F1. Each battery cell 1 includes a battery cell housing 11 and two electrode terminals 12, and the two electrode terminals 12 are arranged opposite each other on two sides of the battery cell housing 11 along a second direction F2, where the second direction F2 is the direction in which the first fixing members 21 and the second fixing members 22 in one battery cell group 10 are arranged opposite each other, and the second direction F2 is perpendicular to the first direction F1. Along the first direction F1, the electrode terminals 12 of two adjacent battery cell groups 10 are connected by means of a conductive member 24, and a connection area 25 is formed on the conductive member 24. Along the second direction F2, each battery cell group 10 includes a first side 101 and a second side 102 which are arranged opposite each other, where the first fixing member 21 is bonded to at least part of the electrode terminal 12 on the first side 101 of the battery cell group, and the first fixing member 21 is bonded to at least part of the connection area 25 close to the first side 101 of the battery cell group. The first fixing members 21 are conducive to providing protection of the electrode terminals 12 of the battery cells 1, and are conducive to providing protection of the connection areas 25 formed on the electrode terminals and the conductive members. And/or, the second fixing member 22 is bonded to at least part of the electrode terminal 12 on the second side 102 of the battery cell group, and the second fixing member 22 is bonded to at least part of the connection area 25 close to the second side 102 of the battery cell group. The second fixing members 22 are conducive to providing protection of the electrode terminals 12 of the battery cells 1, and are conducive to providing protection of the connection areas 25 formed on the electrode terminals and the conductive members.

In some embodiments, each battery cell includes an electrode assembly 13, a battery cell housing 11 and electrode terminals 12, the electrode assembly 13 is arranged in the battery cell housing 11, and the electrode terminals 12 are connected to the electrode assembly 13 and extend out of the battery cell housing 11. Two electrode terminals 12 are included, where one electrode terminal is a positive electrode terminal, and the other electrode terminal is a negative electrode terminal. Optionally, along the second direction F2, the positive electrode terminal and the negative electrode terminal are arranged on the same end of the battery cell housing 11. Optionally, along the second direction F2, the positive electrode terminal and the negative electrode terminal are arranged on two opposite ends of the battery cell housing 11. The description takes the positive electrode terminal and the negative electrode terminal arranged on two opposite ends of the battery cell housing 11 as an example for explanation.

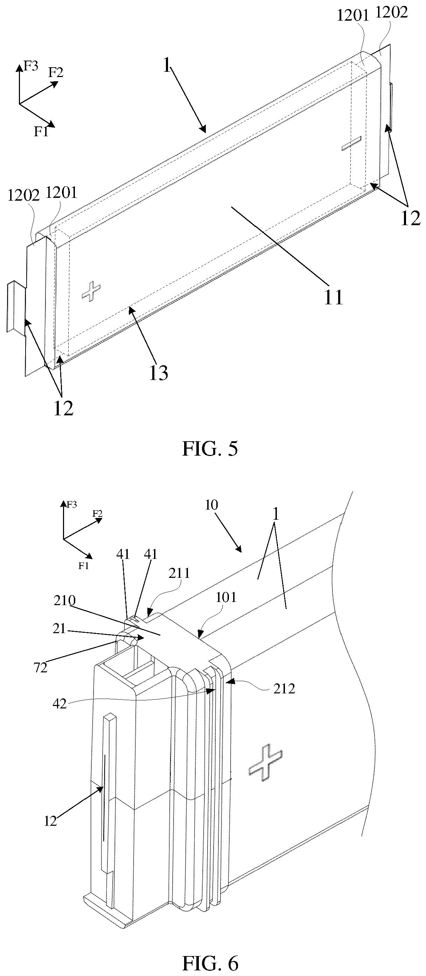

As shown in FIG. 5, the electrode terminal 12 includes a first section 1201 located inside the battery cell housing 11 and a second section 1202 located outside the battery cell housing 11, where the first section 1201 is connected to the electrode assembly 13.

In some embodiments, the electrode assembly 13 may include a positive electrode plate, a negative electrode plate and a separator, where the separator is located between the positive electrode plate and the negative electrode plate, the electrode assembly 13 may be formed by winding the positive electrode plate, the separator and the negative electrode plate, or may be formed by stacking the positive electrode plate, the separator and the negative electrode plate. The related content of the positive electrode plate, the separator and the negative electrode plate can refer to related technologies, which is not limited in this application. For example, the positive electrode plate may include a positive active material layer and a positive current collector, the positive active material layer is disposed on the positive current collector, for example, the positive active material layer may be coated on the positive current collector, the edge of the positive current collector has a blank foil area, and the electrode terminal 12 is connected to the blank foil area, for example, the electrode terminal 12 may serve as the positive electrode terminal or an electrode terminal for sampling. For example, the negative electrode plate may include a negative active material layer and a negative current collector, the negative active material layer is disposed on the negative current collector, for example, the negative active material layer may be coated on the negative current collector, the edge of the negative current collector has a blank foil area, and the electrode terminal 12 is connected to the blank foil area, for example, the electrode terminal 12 may serve as the negative electrode terminal or an electrode terminal for sampling.

In some embodiments, in the same battery cell group 10, along the first direction F1, a projection of the first fixing member 21 is separated from a projection of the electrode assembly 13 of the battery cell 1 in the battery cell group 10, which is conducive to reducing the influence of the first fixing member 21 on expansion of the electrode assembly 13.

In some embodiments, in the same battery cell group 10, along the first direction F1, a projection of the second fixing member 22 is separated from a projection of the electrode assembly 13 of the battery cell 1 in the battery cell group 10, which is conducive to reducing the influence of the second fixing member 22 on expansion of the electrode assembly 13.

An electrochemical apparatus 100 provided in the first aspect of the embodiments of this application will be described in detail below. It can be understood that the contents described below do not serve as any limitations in the embodiments of this application.

The electrochemical apparatus 100 provided in the first aspect of this application may be a secondary battery, of which the types may include, but are not limited to, lithium-ion batteries, sodium-ion batteries, lead storage batteries, etc.

FIG. 1 and FIG. 2, as views in the first direction F1, show a case that the number of battery cell groups 10 of the electrochemical apparatus 100 satisfies M ≥ 2, and the number of battery cells 1 in each battery cell group 10 is greater than 1. As can be understood with reference to FIG. 2, the battery cells 1 in each battery cell group 10 are sequentially stacked along the first direction F1, and M battery cell groups 10 are sequentially arranged along the first direction F1. Other cases can be deduced from this, and no unnecessary details will be given here. Optionally, the number of conductive members 24 is M-1. For example, in FIG. 2, M=8, N=16, each battery cell group 10 includes 2 battery cells 1, and the total number of conductive members 24 is 7 (i.e. M-1), which of course does not serve as limitations to this application.

In some embodiments, it is possible in this application that M first fixing members 21 are located on the first sides 101 of M battery cell groups 10, respectively, each first fixing member is bonded to at least part of the electrode terminal 12 on the first side 101 of each battery cell group 10, and one first fixing member 21 is located on the first side 101 of one battery cell group 10. M second fixing members 22 are located on the second sides 102 of M battery cell groups 10, respectively, each second fixing member is bonded to at least part of the electrode terminal 12 on the second side 102 of each battery cell group 10, and one second fixing member 22 is located on second side 102 of one battery cell group 10.

In some embodiments, the first fixing member 21 covers a second section 1202 of each electrode terminal 12, which improves protection of the electrode terminal 11.

In some embodiments, the second fixing member 22 covers a second section 1202 of each electrode terminal 12, which improves protection of the electrode terminal 11.

In some embodiments, the first fixing member 21 covers at least part of the battery cell housing, which improves protection of the battery cell housing.

In some embodiments, the second fixing member 22 covers at least part of the battery cell housing, which improves protection of the battery cell housing.

In some embodiments, the electrode terminals 12 of two adjacent battery cell groups 10 are connected to the conductive member 24 by welding, and a connection area is formed on the conductive member 24. The welding method is not limited here and can be, for example, laser welding or ultrasonic welding.

In some embodiments, the electrode terminals 12 of two adjacent battery cell groups 10 are connected and then connected to the conductive member 24 by means of another conductive member by welding.

In some embodiments, the electrode terminals 12 of two battery cell groups 10 are connected to the conductive member 24 by means of a conductive adhesive, that is, at least one electrode terminal 12 of each of the two battery cell groups 10 is bonded to the conductive member 24 by means of the conductive adhesive, so as to be connected by means of the conductive member 24, and a connection area 25 is formed on the conductive member 24.

In some embodiments, the electrode terminals 12 and the conductive members 24 of two battery cell groups 10 are connected by means of mechanical structures. One of the electrode terminals 12 and the conductive member 24 is provided with a concave portion, and the other is provided with a convex portion. The concave portion and the convex portion are connected, and a connection area 25 is formed on the conductive member 24.

In some embodiments, one of the two electrode terminals 12 of the battery cell 1 is a positive electrode terminal, and the other thereof is a negative electrode terminal. By connecting N battery cells 1 of the electrochemical apparatus 100 in this application to each other in series or in parallel, ultimately, a positive electrode of the electrochemical apparatus 100 is formed by the positive electrode terminal of at least one battery cell 1, and a negative electrode of the electrochemical apparatus 100 is formed by the negative electrode terminal of at least one battery cell 1.

In some embodiments, the number of electrode terminals 12 of the battery cell 1 is greater than two, and at least one electrode terminal 12 can be used for sampling physical parameters (voltage, current, etc.) of the battery cell, and for example, may be electrically connected to a battery management system.

In some embodiments, the first fixing member 21 is provided on the first side 101 of the battery cell group 10 and at the conductive member 24 by means of an injection molding process or a pouring process, so as to be bonded to the connection area 25 close to the first side 101 of the battery cell group 10, the second section 1202 of the electrode terminal 11 and at least part of the battery cell housing 11, which improves protection of the connection areas 25 formed on the electrode terminal 12 and the conductive member 24. In some embodiments, the second fixing member 22 is provided on the second side 102 of the battery cell group 10 and at the conductive member 24 by means of the injection molding process or the pouring process, so as to be bonded to the connection area 25 close to the second side 102 of the battery cell group 10, the second section 1202 of the electrode terminal 11 and at least part of the battery cell housing 11, which improves protection of the connection areas 25 formed on the electrode terminal 12 and the conductive member 24.

In some embodiments, through injection molding, an insulating material can be melted by means of an injection molding device, so that the melted insulating material covers the battery cell group 10 and the conductive member 24. After curing of the insulating material, the first fixing member 21 or the second fixing member 22 is formed, so as to be bonded.

In some embodiments, the injection molding process for the first fixing member 21 includes: first, connecting at least one electrode terminal 12 of each of two adjacent battery cell groups 10 in the first direction F1 by means of a conductive member 24, for example, connecting the electrode terminals 12 of the two battery cell groups 10 by welding same to the conductive member 24; then, performing injection molding on the first sides 101 of the battery cell groups 10 and at the conductive member 24, so that the connection areas 25 formed on the electrode terminal 12 and the conductive member 24, the second section 1202 of the electrode terminal 12 and at least part of the battery cell housing 11 are covered with the insulating material; and after curing of the insulating material, forming a first fixing member 21, thereby making the structure of the injection-molded first fixing member 21 more stable, which is conducive to improving the protective effect.

In some embodiments, the injection molding process for the second fixing member 22 includes: first, connecting at least one electrode terminal 12 of each of two adjacent battery cell groups 10 in the first direction F1 by means of a conductive member 24, for example, connecting the electrode terminals 12 of the two battery cell groups 10 by welding same to the conductive member 24; then, performing injection molding on the second sides 102 of the battery cell groups 10 and at the conductive member 24, so that the connection areas 25 formed on the electrode terminal 12 and the conductive member 24, the second section 1202 of the electrode terminal 12 and at least part of the battery cell housing 11 are covered with the insulating material; and after curing of the insulating material, forming a second fixing member 22, thereby making the structure of the injection-molded second fixing member 22 more stable, which is conducive to improving the protective effect.

In some embodiments, by means of the pouring process, the insulating material (such as a flowable insulating material) can cover the battery cell group 10 and the conductive member 24. After curing of the insulating material, the first fixing member 21 or the second fixing member 22 is formed, so as to be bonded. Optionally, the insulation material includes a potting glue.

In some embodiments, the shape and structure of each first fixing member 21 may be the same or different, which is not limited here. The shape and structure of each second fixing member 22 may be the same or different, which is not limited here. In some embodiments, there may be only one battery cell 1 in each battery cell group 10. In some embodiments, each battery cell group 10 may include at least one battery cell 1, but the specific number of battery cells 1 in each battery cell group 10 is not limited here. For example, the numbers of battery cells 1 in the battery cell groups 10 may be equal; alternatively, the numbers of battery cells 1 in the battery cell groups 10 may be unequal; or still alternatively, the numbers of battery cells 1 in some battery cell groups 10 are equal.

In this application, when a certain battery cell group 10 includes a plurality of battery cells 1, the electrode terminals 12 of the battery cells 1 in the battery cell groups 10 can be connected together (e.g. by welding), and then the connected electrode terminals 12 of the battery cell groups 10 are sequentially connected (e.g. by welding), so as to form series connection or parallel connection between adjacent battery cell groups 10.

Several examples are given below to facilitate understanding of N battery cells 1, M battery cell groups 10, M first fixing members 21, M second fixing members 22 and M-1 conductive members 24 of the electrochemical apparatus 100 in this application. It should be understood that examples 1.1 to 1.3 below do not serve as any limitations in this application.

Example 1.1: $2 \le M \le N$ in this application, when $2 = M = N$, in example 1.1, the electrochemical apparatus 100 includes 2 battery cells 1, 2 first fixing members 21, 2 second fixing members 22 and 1 conductive member 24, where the 2 battery cells 1 are divided into 2 battery cell groups 10, each battery cell group 10 includes 1 battery cell 1, the first fixing members 21 are arranged on first sides 101 of the battery cell groups 10 and are bonded to at least part of the electrode terminals 12 on the first sides 101 of the battery cell groups 10, and different first fixing members 21 are arranged on first sides 101 of different battery cell groups 10; and the second fixing members 22 are arranged on second sides 102 of the battery cell groups 10, and are bonded to at least part of the electrode terminals 12 on the second sides 102 of the last battery cell group 10, and different second fixing members 22 are arranged on second sides 102 of different battery cell groups 10. The 1 conductive member 24 connects the electrode terminal 12 on the first side 101 of one first battery cell group 10 to the electrode terminal 12 on the second side 102 of the other battery cell group 10, a connection area 25 is formed on the conductive member 24, 1 first fixing member 21 is bonded to at least part of the connection area 25, and 1 second fixing members 22 is bonded to at least part of the connection area 25.

Example 1.2: $2 \le M \le N$ in this application, for example, in example 1.2, the electrochemical apparatus 100 includes 4 battery cells 1, 2 first fixing members 21, 2 second fixing members 22 and 1 conductive member 24, where the 4 battery cells 1 are divided into 2 battery cell groups (i.e. N=4 and M=2), the numbers of the battery cells 1 in the 2 battery cell groups are respectively 2 and 2. The battery cells 1 in each battery cell group 10 are sequentially stacked along the first direction F1, and the 2 battery cell groups 10 are arranged along the first direction F1; each first fixing member 21 is arranged on the first side 101 of one battery cell group 10 and is bonded to at least part of at least one electrode terminal 12 on the first side 101 of the battery cell group 10, and different first fixing members 21 are arranged on first sides 101 of different battery cell groups 10; and each second fixing member 22 is arranged on the second side 102 of the battery cell group 10, and is bonded to at least part of at least one electrode terminal 12 on the second side 102 of the battery cell group 10, and different second fixing members 22 are arranged on second sides 102 of different battery cell groups 10. The 1 conductive member 24 connects the electrode terminal 12 on the first side 101 of one first battery cell group 10 to the electrode terminal 12 on the second side 102 of the other battery cell group 10, a connection area 25 is formed on the conductive member 24, 1 first fixing member 21 is bonded to at least part of the connection area 25, and 1 second fixing members 22 is bonded to at least part of the connection area 25.

Example 1.3: $2 \leq M \leq N$ in this application, for example, in example 1.3, the electrochemical apparatus 100 includes 4 battery cells 1, 3 first fixing members 21, 3 second fixing members 22 and 2 conductive members 24, where the 4 battery cells 1 are divided into 3 battery cell groups (i.e. N=4 and M=3), the numbers of the battery cells 1 in the 3 battery cell groups are respectively 2, 1 and 1; the battery cells 1 in each battery cell group 10 are sequentially arranged along the first direction F1, and the 3 battery cell groups 10 are arranged along the first direction F1; each first fixing member 21 is arranged on the first side 101 of one battery cell group 10 and is bonded to at least part of the electrode terminal 12 on the first side 101 of the battery cell group 10, and different first fixing members 21 are arranged on first sides 101 of different battery cell groups 10; and each second fixing member 22 is arranged on the second side 102 of one battery cell group 10, and is bonded to at least part of the electrode terminal 12 on the second side 102 of the battery cell group 10, and different second fixing members 22 are arranged on second sides 102 of different battery cell groups 10, where one conductive member 24 connects the electrode terminal 12 on the first side 101 of a first battery cell group 10 to the electrode terminal 12 on the second side 102 of a second battery cell group 10, a connection area 25 is formed on the conductive member 24, and the first fixing member 21 of the first battery cell group 10 and the second fixing member 22 of the second battery cell group 10 are bonded to at least part of the connection area 25; the other conductive member 24 connects the electrode terminal 12 on the first side 101 of the second battery cell group 10 to the electrode terminal 12 on the second side of a third battery cell group 10, a connection area 25 is formed on the conductive member 24, and the first fixing member 21 of the second battery cell group 10 and the second fixing member 22 of the third battery cell group 10 are bonded to at least part of the connection area 25.

Obviously, a person skilled in the art can deduce other cases of the electrochemical apparatus 100 of this application from examples 1.1 to 1.3 mentioned above, and therefore no unnecessary details will be given here.

In some embodiments, at least one battery cell group 10 includes a plurality of battery cells 1, and on the first side 101 of the battery cell group 10, at least one electrode terminal 12 of at least one of the pluralities of battery cells 1 is bent.

In some embodiments, at least one battery cell group 10 includes a plurality of battery cells 1, and on the second side 102 of the battery cell group 10, at least one electrode terminal 12 of at least one of the pluralities of battery cells 1 is bent.

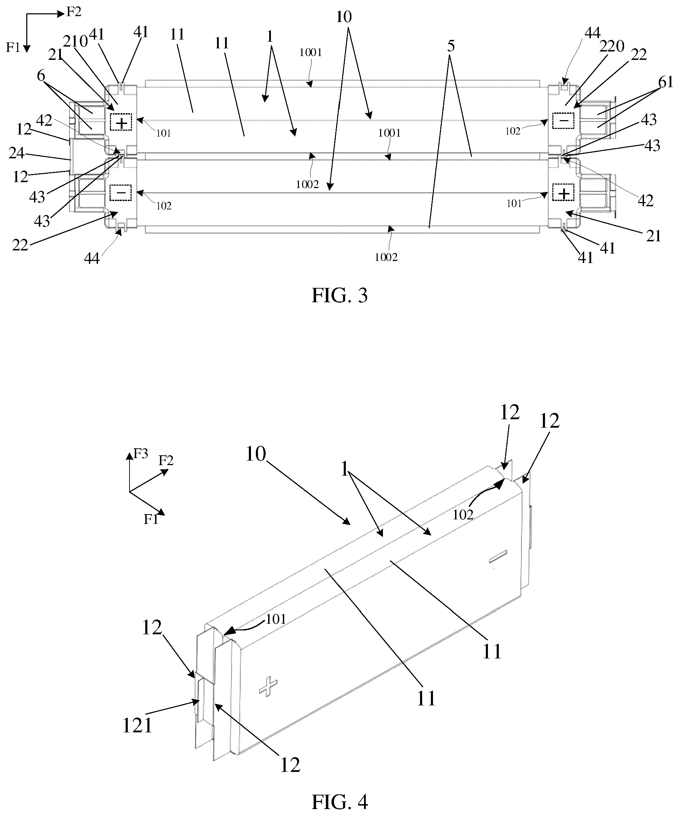

In FIG. 4 showing a case that one battery cell group 10 includes two battery cells 1, where on the first side 101 of the battery cell group 10, at least one electrode terminal 12 of each of two battery cells 1 is bent, and the bent electrode terminals 12 are connected by welding to form a first electrode terminal connecting assembly 121; and on the second side 102 of the battery cell group 10, at least one electrode terminal 12 of each of the two battery cells 1 is bent, and the bent electrode terminals 12 are connected by welding.

In some embodiments, in a case that one battery cell group 10 includes three battery cells 1, on the first side 101 of the battery cell group 10, in the three battery cells 1, at least one electrode terminal 12 of two outer battery cells 1 is bent, the electrode terminal 12 of the middle battery cell 1 is not bent, and the electrode terminals 12 of the three battery cells 1 are connected by welding; and on the second side 102 of the battery cell group 10, in the three battery cells 1, at least one electrode terminal 12 of two outer battery cells 1 is bent, the electrode terminal 12 of the middle battery cell 1 is not bent, and the electrode terminals 12 of the three battery cells 1 are connected by welding. It should be understood that this does not serve as any limitations in this application.

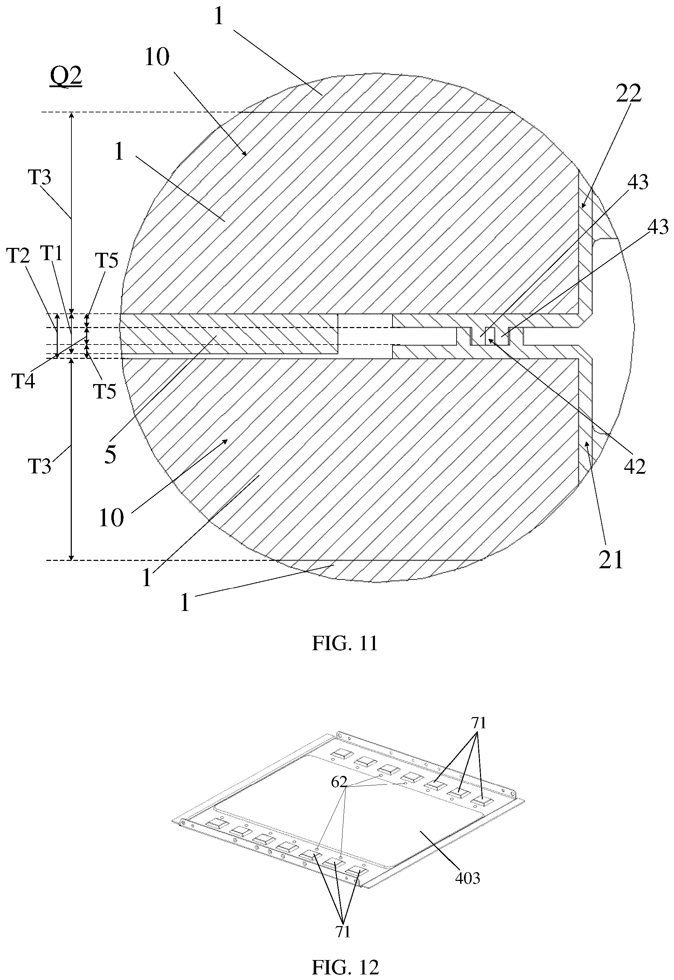

In some embodiments, in two adjacent battery cell groups 10, the first fixing member 21 of one of the battery cell groups 10 is connected to the second fixing member 22 of the other of the battery cell groups 10, and a distance 26 is formed between the first fixing member 21 and the second fixing member 22 along the first direction F1, which is conducive to improving heat dissipation of the battery cell groups 10. Optionally, one of the first fixing member 21 and the second fixing member 22 is provided with a convex portion, and a distance 26 is formed between the first fixing member 21 and the second fixing member 22 by means of the convex portion. As shown in FIG. 11, the length of the distance 26 is represented as T4. Optionally, one of the first fixing member 21 and the second fixing member 22 is provided with a convex portion, the other of the first fixing member 21 and the second fixing member 22 is provided with a concave portion, where along the first direction F1, the length of the convex portion is greater than the length of the concave portion, and a distance 26 is formed between the first fixing member 21 and the second fixing member 22 by fitting the convex portion with the concave portion, which improves the stability of connection between two adjacent battery cell groups 10. Optionally, the first fixing member 21 includes a convex portion and a concave portion, the second fixing member 22 includes a convex portion and a concave portion, and a distance 26 is formed between the first fixing member 21 and the second fixing member 22 by fitting the convex portion with the concave portion, which further improves the stability of connection between two adjacent battery cell groups 10.

In some embodiments, along the first direction F1, the battery cell group 10 includes a first side 1001 and a second side 1002 which are opposite each other, the first fixing member 21 includes a first convex portion 41 and a first concave portion 42, the second fixing member 22 includes a second convex portion 43 and a second concave portion 44, the first convex portion 41 and the second convex portion 43 are located on the first side 1001, and the first concave portion 42 and the second concave portion 44 are located on the second side 1002. In two adjacent battery cell groups 10, the first convex portion 41 is provided on the second concave portion 44, and the second convex portion 43 is provided on the first concave portion 42, where along the first direction F1, the length of the first convex portion 41 is greater than the length of the second concave portion 44, the length of the second convex portion 43 is greater than the length of the first concave portion 42, and a distance 26 is formed between the first fixing member 21 and the second fixing member 22 by fitting the convex portion with the concave portion, which is conducive to improving the heat dissipation of the battery cell groups 10. Optionally, where along the first direction F1, the length of the first convex portion 41 is equal to the length of the second concave portion 44, the length of the second convex portion 43 is equal to the length of the first concave portion 42, which further improves the stability of connection between two adjacent battery cell groups 10.

In some embodiments, as shown in FIG. 2, along the first direction F1, the battery cell group 10 includes a first side 1001 and a second side 1002 which are opposite each other, the first fixing member 21 includes a first convex portion 41 and a first concave portion 42, the second fixing member 22 includes a second convex portion 43 and a second concave portion 44, the first convex portion 41 and the second convex portion 43 are located on the first side 1001, and the first concave portion 42 and the second concave portion 44 are located on the second side 1002; in two adjacent battery cell groups 10, the second convex portion 43 is provided on the first concave portion 42, where along the first direction F1, the length of the second convex portion 43 is greater than the length of the first concave portion 42, and a distance 26 is formed between the first fixing member 21 and the second fixing member 22 by fitting the second convex portion 43 with the first concave portion 42, which is conducive to improving the heat dissipation of the battery cell groups 10. Optionally, where along the first direction F1, the length of the second convex portion 43 is equal to the length of the first concave portion 42, which further improves the stability of connection between two adjacent battery cell groups 10.

In some embodiments, the first fixing member 21 includes a first sleeve 210. In some embodiments, along the first direction F1, the wall thickness of the first sleeve 210 is greater than or equal to 1 mm and less than or equal to 5 mm. Optionally, the wall thickness of the first sleeve 210 is 1 mm, 1.5 mm, 2 mm, 2.5 mm, 3 mm, 3.5 mm, 4 mm, 4.5 mm, 5 mm, etc., which is conducive to improving the protective effect on the electrode terminals. Optionally, the wall thickness of the first sleeve 210 along the first direction F1 is represented as T5 shown in FIG. 11.

In some embodiments, the second fixing member 22 includes a second sleeve 220. In some embodiments, along the first direction F1, the wall thickness of the second sleeve 220 is greater than or equal to 1 mm and less than or equal to 5 mm. Optionally, the wall thickness of the second sleeve 220 is 1 mm, 1.5 mm, 2 mm, 2.5 mm, 3 mm, 3.5 mm, 4 mm, 4.5 mm, 5 mm, etc., which is conducive to improving the protective effect on the electrode terminals. Optionally, the wall thickness of the second sleeve 220 along the first direction F1 is represented as T5 shown in FIG. 11.

In some embodiments, as shown in FIG. 2 and FIG. 3, the electrochemical apparatus 100 further includes resilient members 5, each resilient member 5 is arranged between two adjacent battery cell groups 10, and the resilient member 5 is connected to at least one of the two battery cell groups 10. The battery cell group 10 compresses the resilient member 5, so that the resilient member 5 is deformed, thereby providing a deformation space for the expanded battery cell 1.

Optionally, the resilient member 5 may be connected to the battery cell group 10 in a bonded form, thereby being in contact with at least one of the two battery cell groups 10. Bonding may be performed by means of glue, a double-sided adhesive tape and other structures, which is not limited here.

In some embodiments, the resilient member 5 includes foam. Foam is a material made of foamed plastic particles. Foam has a series of characteristics such as good elasticity, a light weight, fast pressure-sensitive fixation, convenience to use, free bending, an ultra-thin volume and reliable performance. For example, types of foam include PU foam, anti-static foam, conductive foam, EPE foam, anti-static EPE foam, CR foam, EVA foam, bridged PE foam, SBR foam, EPDM foam, etc. The type of foam included by the resilient member 5 is not limited in this application.

In some embodiments, the resilient member 5 includes a spring. For example, the resilient member 5 includes a first plate body, a second plate body and a spring, where the spring is connected between the first plate body and the second plate body; the first plate body is connected to one of two adjacent battery cell groups 10 along the first direction F1; and the second plate body is connected to the other of the two battery cell groups 10. When expanding, the battery cell 1 drives the first plate body and/or the second plate body to move to compress the spring, such that the spring is deformed and supports the expanded battery cell 1, gives play to the buffering effect on pressure generated from expansion of the battery cell 1, and alleviates superimposed displacement of the battery cells 1 of the electrochemical apparatus 100 along the first direction F1 due to expansion.

In some embodiments, as shown in FIG. 11, in the electrochemical apparatus 100, the thickness of the resilient member 5 that is not compressed by the battery cell is T1, the distance formed along the first direction F1 between two adjacent battery cell groups in the first direction F1 is T2, the thickness of the battery cell 1 that is not subjected to a charge-discharge cycle is T3, and half of the sum of numbers of the battery cells 1 in two adjacent cell groups 10 in the first direction F1 is X, where T1, T2, T3 and X satisfy: T2 - X * T3 * 20% ≤ T1 ≤ T2.

Specifically, X may be an integer. For example, when the numbers of battery cells 1 of two adjacent battery cell groups 10 along the first direction F1 are respectively 2 and 2, the sum of the two numbers is 4, and thus X = 4/2 = 2; for another example, when the numbers of battery cells 1 of two adjacent battery cell groups 10 along the first direction F1 are respectively 2 and 4, the sum of the two numbers is 6, and thus X = 6/2 = 3; and for still another example, when the numbers of battery cells 1 of two adjacent battery cell groups 10 along the first direction F1 are respectively 1 and 1, the sum of the two numbers is 2, and thus X = 2/2 = 1. Alternatively, X may also be a decimal. For example, when the numbers of battery cells 1 of two adjacent battery cell groups 10 along the first direction F1 are respectively 2 and 3, the sum of the two numbers is 5, and thus X = 5/2 = 2.5. Of course, these examples do not serve as limitations in this application. It can be seen that when only one of the numbers of battery cells 1 of two adjacent battery cell groups 10 along the first direction F1 is an odd number, X is a decimal, while in other cases, X is an integer.

Specifically, when T1 = T2 - X * T3 * 20%, in an initial state of the electrochemical apparatus 100, the resilient member 5 can only be in contact with the battery cell 1 of the first battery cell group 10 of two adjacent battery cell groups 10 (denoted as the first battery group 10 and the second battery group 10 respectively) along the first direction F1; when the battery cell 1 of the battery cell group 10 expands to reach 20% of an initial thickness, the resilient member 5 begins to come into contact with the battery cell 1 of the second battery cell group 10; and during subsequent expansion, the resilient member 5 is compressed and supports expansion of the battery cell 1 to reduce the risk of outer packaging (e.g. made of a metal-plastic film) of the battery cell 1 being torn due to expansion, gives play to the buffering effect on pressure generated from expansion of the battery cell 1, and alleviates superimposed displacement of the battery cells 1 of the electrochemical apparatus 100 along the first direction F1 due to expansion, thereby meeting usage requirements of the electrochemical apparatus 100.

When T1 = T2, in the initial state of the electrochemical apparatus 100, the resilient member 5 may be in contact with both two adjacent battery cell groups 10 in the first direction F1; and when the battery cell 1 of the battery cell group 10 expands, the resilient member 5 is compressed and supports the expanded battery cell 1 to reduce the risk of outer packaging (e.g. made of a metal-plastic film) of the battery cell 1 being torn due to expansion, gives play to the buffering effect on pressure generated from expansion of the battery cell 1, and alleviates superimposed displacement of the battery cells 1 of the electrochemical apparatus 100 in the first direction F1 due to expansion, thereby meeting usage requirements of the electrochemical apparatus 100.

Optionally, T1, T2, T3 and X satisfy: T2 - X * T3 * 15% ≤ T1 ≤ T2 - X * T3 * 0.5%.

In some embodiments, when T1 = T2 - X * T3 * 15%, in the initial state of the electrochemical apparatus 100, one side of the resilient member 5 is not in contact with the battery cell 1 of the battery cell group 10 along the first direction F1; when the battery cell 1 of the battery cell group 10 expands to reach 15% of the initial thickness, the resilient member 5 may be in contact with the battery cells 1 of the battery cell groups 10 on both sides thereof; and subsequently, the resilient member 5 is compressed and supports expansion of the battery cell 1 to reduce the risk of outer packaging (e.g. made of a metal-plastic film) of the battery cell 1 being torn due to expansion, gives play to the buffering effect on pressure generated from expansion of the battery cell 1, and alleviates superimposed displacement of the battery cells 1 of the electrochemical apparatus 100 long the first direction F1 due to expansion, thereby meeting usage requirements of the electrochemical apparatus 100.

In some embodiments, when T1 = T2 - X * T3 * 0.5%, in the initial state of the electrochemical apparatus 100, one side of the resilient member 5 is not in contact with the battery cell 1 of the battery cell group 10 along the first direction F1, which can reduce the cost relative to a case that both sides of the resilient member 5 are in contact with the battery cell 1 (i.e. under the condition of T1 = T2) when the requirements are met, and is more conducive to heat dissipation of the battery cell 1 relative to the case that both sides of the resilient member 5 are in contact with the battery cell 1.

In some embodiments, as shown in FIG. 1 and FIGS. 12-13, the electrochemical apparatus 100 further includes a shell 4. The shell 4 includes a first wall surface 401 and a second wall surface 402 which are arranged opposite each other along the first direction F1. Elastic structures such as foam may be provided between the first wall surface 401 and M battery cell groups 10, and elastic structures such as foam may be provided between the second wall surface 402 and M battery cell groups 10, which is not limited here.

In some embodiments, the shell 4 includes a third wall surface 403 and a fourth wall surface 404 which are arranged opposite each other along the third direction F3, and the third direction F3 is perpendicular to the first direction F1 and the second direction F2. At least one of the third wall surface 403 and the fourth wall surface 404 is provided with a fifth convex portion 71, and along the first direction F1, the fifth convex portion 71 is provided between the first fixing member 21 and the second fixing member 22 so as to limit the movement of the battery cell group 10.

In some embodiments, as shown in FIG. 2, the first fixing member 21 is provided with at least one first through hole 61, and the first through hole 61 penetrates the first fixing member 21 along the third direction F3; and/or the second fixing member 22 is provided with at least one first through hole 61, and the first through hole 61 penetrates the second fixing member 22 along the third direction F3, where the third direction F3 is perpendicular to the first direction F1 and the second direction F2, which is conducive to heat dissipation at the electrode terminals 12 bonded to the first fixing member 21 and/or the second fixing member 22.

In some optional implementation modes, as shown in FIG. 1 and FIG. 12, a second through hole 62 is provided on the third wall surface 403 and/or the fourth wall surface 404, and the second through hole 62 is in communication with the first through hole 61. In this application, by means of such a structure, the heat dissipation effect can be further enhanced.

It can be understood that the contents described above are merely some optional embodiments of the electrochemical apparatus 100 provided in the first aspect of the embodiments of this application, and do not serve as any limitations in the embodiments of this application.

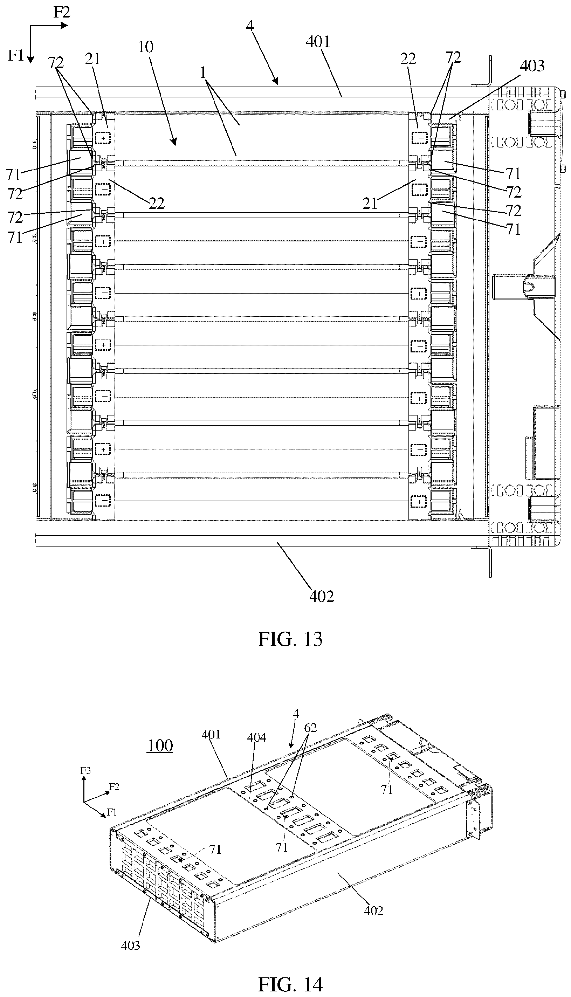

According to a second aspect of this application, as shown in FIGS. 14-25, provided is an electrochemical apparatus 100, including: N battery cells 1, A first fixing members 21, A second fixing members 22 and (L - 1) * A third fixing members 23, where N, M and L are all positive integers and satisfy $2 \leq M \leq N$ and $L \geq 2$; the N battery cells 1 are divided into M battery cell groups 10, the M battery cell groups are divided into A rows and L columns, and along a second direction F2, the battery cell group 10 includes a first side 101 and a second side 102 which are arranged opposite each other; each battery cell group 10 includes at least one battery cell 1, the battery cells 1 in the battery cell groups 10 are arranged along a first direction F1, and the second direction F2 is perpendicular to the first direction F1; the battery cell 1 includes a battery cell housing 11 and two electrode terminals 12, and the two electrode terminals 12 are arranged opposite each other on two sides of the battery cell housing 11 along the second direction F2, where in a row of battery cell groups A1, the first fixing member 21 is located on the first side 101 of the first battery cell group 10 in this row of battery cell groups A1, and is bonded to at least part of the electrode terminal 12 on the first side 101 of the first battery cell group 10; the second fixing member 22 is located on the second side 102 of the last battery cell group 10 in this row of battery cell groups A1, and is bonded to at least part of the electrode terminal 12 on the second side 102 of the last battery cell group 10; and in a row of battery cell groups A1, the electrode terminals 12 of two adjacent battery cell groups 10 are connected, the third fixing member 23 is connected to the two adjacent battery cell groups 10, respectively, the third fixing member 23 is bonded to at least part of the electrode terminal 12 on the second side 102 of one of the two adjacent battery cell groups 10, and the third fixing member 23 is bonded to at least part of the electrode terminal 12 on the first side 101 of the other of the two adjacent battery cell groups 10. The first fixing members 21, the second fixing members 22 and the third fixing members 23 are conducive to strengthening protection of the electrode terminals 12 of the battery cell groups 10, which improves the stability of the electrochemical apparatus 100 and prolonging the service life thereof.

The electrochemical apparatus 100 provided in the second aspect of the embodiments of this application will be described in detail below. It can be understood that the contents described below do not serve as any limitations in the embodiments of this application.

The electrochemical apparatus 100 provided in the second aspect of this application may be a secondary battery, of which the types may include, but are not limited to, lithium-ion batteries, sodium-ion batteries, lead storage batteries, etc.

In some embodiments, each battery cell includes an electrode assembly 13, a battery cell housing 11 and electrode terminals 12, the electrode assembly 13 is arranged in the battery cell housing 11, and the electrode terminals 12 are connected to the electrode assembly 13 and extend out of the battery cell housing 11. Two electrode terminals 12 are included, where one electrode terminal is a positive electrode terminal, and the other electrode terminal is a negative electrode terminal. Optionally, along the second direction F2, the positive electrode terminal and the negative electrode terminal are arranged on the same end of the battery cell housing 11. Optionally, along the second direction F2, the positive electrode terminal and the negative electrode terminal are arranged on two opposite ends of the battery cell housing 11. The description takes the positive electrode terminal and the negative electrode terminal arranged at opposite ends of the battery cell housing 11 as an example for explanation.

As shown in FIG. 5, the electrode terminal 12 includes a first section 1201 located inside the battery cell housing 11 and a second section 1202 located outside the battery cell housing 11, where the first section 1201 is connected to the electrode assembly 13.

In some embodiments, the electrode assembly 13 may include a positive electrode plate, a negative electrode plate and a separator, where the separator is located between the positive electrode plate and the negative electrode plate, the electrode assembly 13 may be formed by winding the positive electrode plate, the separator and the negative electrode plate, or may be formed by stacking the positive electrode plate, the separator and the negative electrode plate. The related content of the positive electrode plate, the separator and the negative electrode plate can refer to related technologies, which is not limited in this application. For example, the positive electrode plate may include a positive active material layer and a positive current collector, the positive active material layer is disposed on the positive current collector, for example, the positive active material layer may be coated on the positive current collector, the edge of the positive current collector has a blank foil area, and the electrode terminal 12 is connected to the blank foil area, for example, the electrode terminal 12 may serve as the positive electrode terminal or an electrode terminal for sampling. For example, the negative electrode plate may include a negative active material layer and a negative current collector, the negative active material layer is disposed on the negative current collector, for example, the negative active material layer may be coated on the negative current collector, the edge of the negative current collector has a blank foil area, and the electrode terminal 12 is connected to the blank foil area, for example, the electrode terminal 12 may serve as the negative electrode terminal or an electrode terminal for sampling.

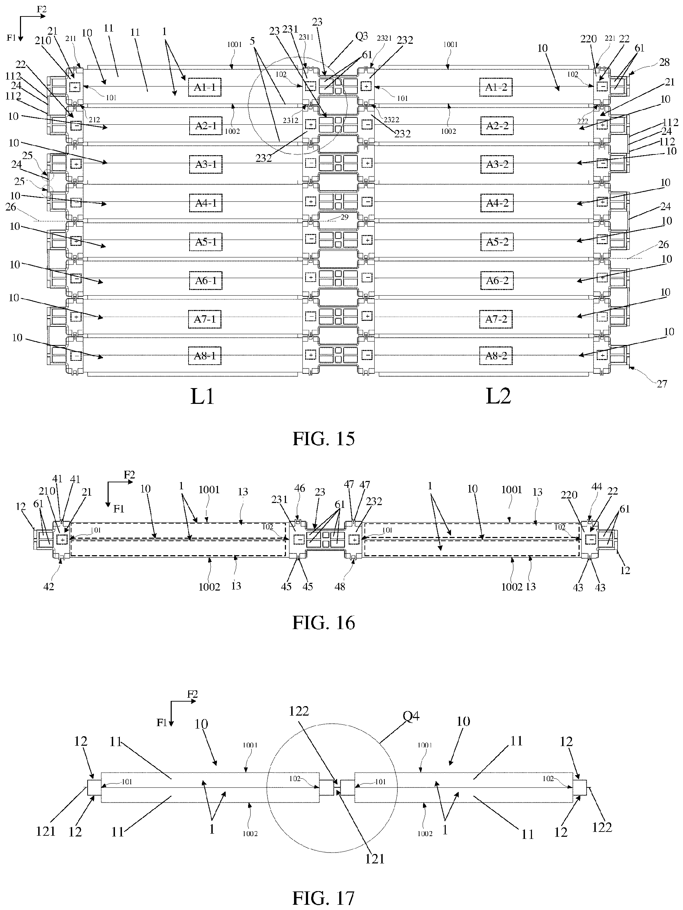

In some embodiments, in the same battery cell group 10, along the first direction F1, a projection of the first fixing member 21 is separated from a projection of the electrode assembly 13 of the battery cell 1 in the battery cell group 10, which reduces the influence of the first fixing member 21 on expansion of the electrode assembly 13. As shown in FIG. 16, the electrode assembly 13 is represented by a dashed box.

In some embodiments, in the same battery cell group 10, along the first direction F1, a projection of the second fixing member 22 is separated from the projection of the electrode assembly 13 of the battery cell 1 in the battery cell group 10, which reduces the influence of the second fixing member 22 on expansion of the electrode assembly 13. As shown in FIG. 16, the electrode assembly 13 is represented by a dashed box.

In some embodiments, in the same battery cell group 10, along the first direction F1, a projection of the first fixing member 23 is separated from a projection of the electrode assembly 13 of the battery cell 1 in the battery cell group 10, which reduces the influence of the third fixing member 23 on expansion of the electrode assembly 13. As shown in FIG. 16, the electrode assembly 13 is represented by a dashed box.

In some embodiments, as shown in FIG. 15, M = 16, 16 battery cell groups 10 are arranged into even-numbered rows of battery cell groups. Specifically, the 16 battery cell groups 10 are arranged into 8 rows of battery cell groups, each row of battery cell groups includes 2 battery cell groups 10, and the 8 rows of battery cell groups are stacked along the first direction F1. The electrochemical apparatus 100 includes 8 first fixing members 21 and 8 second fixing members 22. Along the first direction F1, adjacent battery cell groups 10 are connected by means of the conductive member 24, in two adjacent rows of battery cell groups 10, the electrode terminal 12 on the first side 101 of one first battery cell group 10 is connected to the electrode terminal 12 on the second side 102 of the other battery cell group 10 by means of the conductive member 24, a connection area 25 is formed on the conductive member 24, one first fixing member 21 is bonded to at least part of the connection area 25, and 7 first fixing members 21 are bonded to at least part of 7 connection areas 25. Along the first direction F1, adjacent battery cell groups 10 are connected by means of the conductive member 24, in two adjacent rows of battery cell groups 10, the electrode terminal 12 on the first side 101 of one first battery cell group 10 is connected to the electrode terminal 12 on the second side 102 of the other battery cell group 10 by means of the conductive member 24, a connection area 25 is formed on the conductive member 24, one second fixing member 22 is bonded to at least part of the connection area 25, and 7 second fixing members 22 are bonded to at least part of 7 connection areas. The 8 rows of battery cell groups are connected to form a positive electrode connecting end and a negative electrode connecting end, one first fixing member 21 is bonded to the electrode terminal 12 of the positive electrode connecting end 27, and one second fixing member 22 is bonded to the electrode terminal 12 of the negative electrode connecting end 28.

In some embodiments, M = 18, 18 battery cell groups 10 are arranged into odd-numbered rows of battery cell groups. Specifically, the 18 battery cell groups 10 are arranged into 9 rows of battery cell groups, each row of battery cell groups includes 2 battery cell groups 10, and the 9 rows of battery cell groups are stacked along the first direction F1. The electrochemical apparatus 100 includes 9 first fixing members, 9 second fixing members and 9 third fixing members. Along the first direction F1, adjacent battery cell groups 10 are connected by means of the conductive member 24, in two adjacent rows of battery cell groups 10, the electrode terminal 12 on the first side 101 of one first battery cell group 10 is connected to the electrode terminal 12 on the second side 102 of the other battery cell group 10 by means of the conductive member 24, a connection area 25 is formed on the conductive member 24, one first fixing member 21 is bonded to at least part of the connection area 25, and 8 first fixing members 21 are bonded to at least part of 8 connection areas 25. Along the first direction F1, adjacent battery cell groups 10 are connected by means of the conductive member 24, in two adjacent rows of battery cell groups 10, the electrode terminal 12 on the first side 101 of one first battery cell group 10 is connected to the electrode terminal 12 on the second side 102 of the other battery cell group 10 by means of the conductive member 24, a connection area 25 is formed on the conductive member 24, one second fixing member 22 is bonded to at least part of the connection area 25, and 8 second fixing members 22 are bonded to at least part of 8 connection areas. The 9 rows of battery cell groups are connected to form a positive electrode connecting end and a negative electrode connecting end, one of the second fixing member 22 and the first fixing member 21 is bonded to the electrode terminal 12 of the positive electrode connecting end, and the other is bonded to the electrode terminal 12 of the negative electrode connecting end.

Referring to FIG. 15, the A rows of battery cell groups are sequentially stacked along the first direction F1. The first row of battery cell groups A1 and the second row of battery cell groups A2 are taken as examples for explanation. The first row of battery cell groups A1 and the second row of battery cell groups A2 are stacked along the first direction F1, the first row of battery cell groups A1 includes at least 2 battery cell groups 10 arranged along the second direction F2, and the second row of battery cell groups A2 includes at least 2 battery cell groups 10 arranged along the second direction F2. The description takes the first row of battery cell groups A1 including at least 2 battery cell groups 10 arranged along the second direction F2, and the second row of battery cell groups A2 including at least 2 battery cell groups 10 arranged along the second direction F2 as examples for explanation.

Referring to FIG. 15, the first row of battery cell groups A1 includes battery cell groups A1-1 and battery cell groups A1-2, and the second row of battery cell groups A2 includes battery cell groups A2-1 and battery cell groups A2-2; along the first direction F1, the electrode terminals 12 of two adjacent battery cell groups A1-1 and A2-1 are connected by means of the conductive members 24, and connection areas 25 are formed on the conductive members 24. The connection methods include laser welding and ultrasonic welding.

In some embodiments, along the first direction F1, the electrode terminals 12 of two adjacent battery cell groups A1-2 and A2-2 are connected by means of the conductive members 24, and connection areas 25 are formed on the conductive members 24. The connection methods include laser welding and ultrasonic welding.

In some embodiments, the electrode terminals 12 are connected to the conductive members 24 by means of mechanical structures. One of the electrode terminals 12 and the conductive member 24 is provided with a concave portion, and the other of the electrode terminal 12 and the conductive member 24 is provided with a convex portion. The concave portion and the convex portion are connected, and a connection area 25 is formed on the conductive member 24.

In some embodiments, the electrode terminals 12 are connected to the conductive members 24 by means of a conductive adhesive, at least one electrode terminal 12 of each of the two battery cell groups 10 is bonded to the conductive member 24 by means of the conductive adhesive, so as to be connected by means of the conductive member 24, and a connection area 25 is formed on the conductive member 24.

In some embodiments, the electrode terminals 12 of two adjacent battery cell groups 10 are connected and then connected to the conductive member 24 by means of another conductive member by welding.

In some embodiments, one of the two electrode terminals 12 of the battery cell 1 is a positive electrode terminal, and the other thereof is a negative electrode terminal. By connecting N battery cells 1 of the electrochemical apparatus 100 in this application to each other in series or in parallel, ultimately, a positive electrode of the electrochemical apparatus 100 is formed by the positive electrode terminal of at least one battery cell 1, and a negative electrode of the electrochemical apparatus 100 is formed by the negative electrode terminal of at least one battery cell 1.

In some embodiments, along the first direction F1, in two adjacent battery cell groups 10, the first fixing member 21 of one of the battery cell groups 10 is connected to the second fixing member 22 of the other of the battery cell groups 10, and a distance is formed between the first fixing member 21 and the second fixing member 22 along the first direction F1, which is conducive to improving heat dissipation of the battery cell groups 10. Optionally, one of the first fixing member 21 and the second fixing member 22 is provided with a convex portion, and a distance 26 is formed between the first fixing member 21 and the second fixing member 22 by means of the convex portion. Optionally, one of the first fixing member 21 and the second fixing member 22 is provided with a convex portion, the other of the first fixing member 21 and the second fixing member 22 is provided with a concave portion, where along the first direction F1, the length of the convex portion is greater than the length of the concave portion, and a distance 26 is formed between the first fixing member 21 and the second fixing member 22 by fitting the convex portion with the concave portion, which improves the stability of connection between two adjacent battery cell groups 10. Optionally, the first fixing member 21 includes a convex portion and a concave portion, the second fixing member 22 includes a convex portion and a concave portion, and a distance 26 is formed between the first fixing member 21 and the second fixing member 22 by fitting the convex portion with the concave portion, which further improves the stability of connection between two adjacent battery cell groups 10.

In some embodiments, along the first direction F1, the battery cell group 10 includes a first side 1001 and a second side 1002 which are opposite each other, the first fixing member 21 includes a first convex portion 41 and a first concave portion 42, the second fixing member 22 includes a second convex portion 43 and a second concave portion 44, the first convex portion 41 and the second convex portion 43 are located on the first side 1001, and the first concave portion 42 and the second concave portion 44 are located on the second side 1002. In two adjacent battery cell groups 10, the first convex portion 41 is provided on the second concave portion 44, and the second convex portion 43 is provided on the first concave portion 42, where along the first direction F1, the length of the first convex portion 41 is greater than the length of the second concave portion 44, the length of the second convex portion 43 is greater than the length of the first concave portion 42, and a distance 26 is formed between the first fixing member 21 and the second fixing member 22 by fitting the convex portion with the concave portion, which is conducive to improving the heat dissipation of the battery cell groups 10. Optionally, where along the first direction F1, the length of the first convex portion is equal to the length of the second concave portion, the length of the second convex portion is equal to the length of the first concave portion, which further improves the stability of connection between two adjacent battery cell groups 10.

In some embodiments, as shown in FIGS. 15-16, along the first direction F1, the battery cell group 10 includes a first side 1001 and a second side 1002 which are opposite each other, the first fixing member 21 includes a first convex portion 41 and a first concave portion 42, the second fixing member 22 includes a second convex portion 43 and a second concave portion 44, the first convex portion 41 and the second concave portion 44 are located on the first side 1001, and the first concave portion 42 and the second convex portion 43 are located on the second side 1002; in two adjacent battery cell groups 10, the second convex portion 43 is provided on the first concave portion 42, where along the first direction F1, the length of the second convex portion 43 is greater than the length of the first concave portion 42, and a distance 26 is formed between the first fixing member 21 and the second fixing member 22 by fitting the second convex portion 43 with the first concave portion 42, which is conducive to improving the heat dissipation of the battery cell groups 10. Optionally, where along the first direction F1, the length of the second convex portion 43 is equal to the length of the first concave portion 42, which further improves the stability of connection between two adjacent battery cell groups 10.

In some embodiments, along the first direction F1, in two adjacent battery cell groups 10, the third fixing member 23 of one of the battery cell groups 10 is connected to the third fixing member 23 of the other of the battery cell groups 10, and a distance 29 is formed between the two third fixing members 23 along the first direction F1, which is conducive to improving heat dissipation of the battery cell groups 10. Optionally, one of the two third fixing members 23 is provided with a convex portion, and a distance 29 is formed between the two third fixing members 23 by means of the convex portion. Optionally, one of the two third fixing members 23 is provided with a convex portion, the other of the two third fixing members 23 is provided with a concave portion, where along the first direction F1, the length of the convex portion is greater than the length of the concave portion, and a distance 29 is formed between the two third fixing members 23 by fitting the convex portion with the concave portion, which improves the stability of connection between two adjacent battery cell groups 10. Optionally, the two third fixing members 23 each include a convex portion and a concave portion, and a distance is formed between the two third fixing members 23 by fitting the convex portion with the concave portion, which further improves the stability of connection between two adjacent battery cell groups 10.

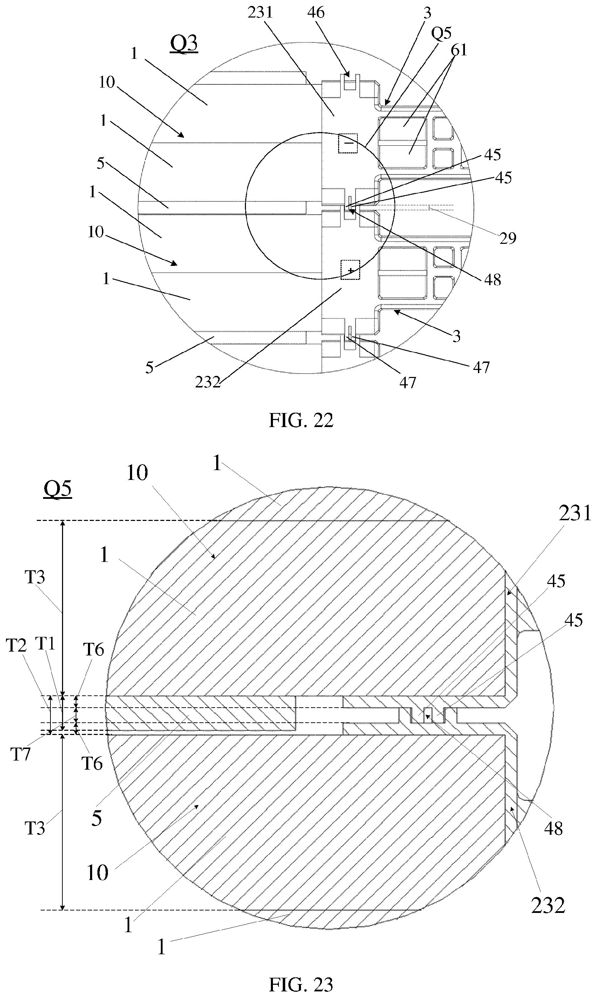

In some embodiments, along the first direction F1, the battery cell group 10 includes a first side 1001 and a second side 1002 which are opposite each other, the third fixing member 23 includes a third convex portion 45 and a third concave portion 46, a fourth convex portion 47 and a fourth concave portion 48, the third convex portion 45 and the fourth convex portion 47 are located on the first side 1001, and the third concave portion 46 and the fourth concave portion 48 are located on the second side 1002. In two adjacent battery cell groups 10, the third convex portion 45 is provided on the fourth concave portion 48, and the fourth convex portion 47 is provided on the third concave portion 46, where along the first direction F1, the length of the third convex portion 45 is greater than the length of the fourth concave portion 48, the length of the fourth convex portion 47 is greater than the length of the third concave portion 46, and a distance 29 is formed between the two adjacent first fixing members 23 by fitting the convex portion with the concave portion, which is conducive to improving the heat dissipation of the battery cell groups 10. Optionally, where along the first direction F1, the length of the third convex portion 45 is equal to the length of the fourth concave portion 48, the length of the fourth convex portion 47 is equal to the length of the third concave portion 46, which further improves the stability of connection between two adjacent battery cell groups 10. As shown in FIG. 23, the length of the distance 29 is represented as T7.

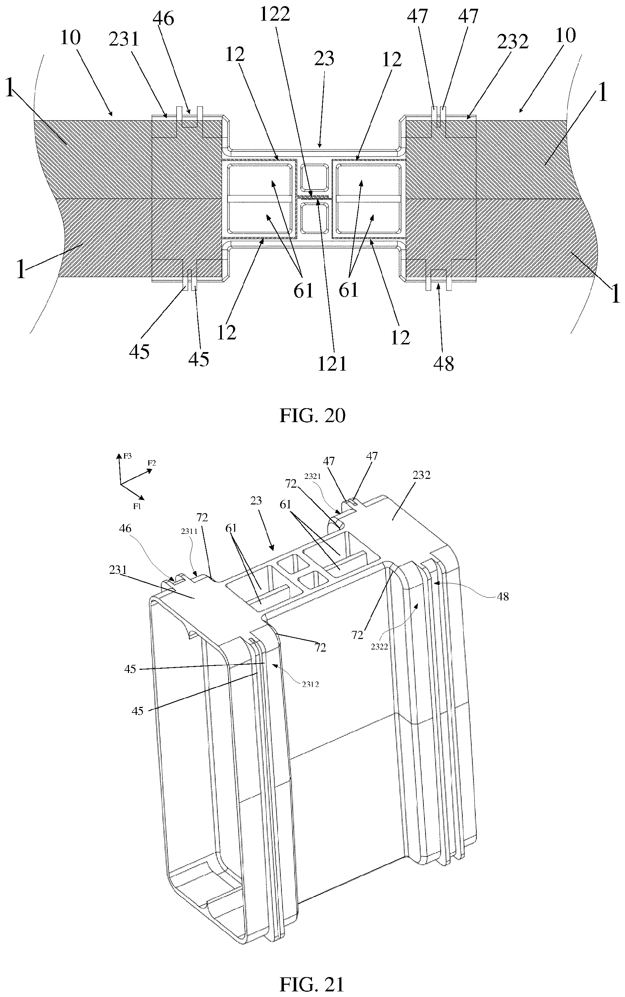

In some embodiments, as shown in FIG. 20, along the first direction F1, the battery cell group 10 includes a first side 1001 and a second side 1002 which are opposite each other, the third fixing member 23 includes a third convex portion 45, a third concave portion 46, a fourth convex portion 47 and a fourth concave portion 48, the third concave portion 46 and the fourth convex portion 47 are located on the first side 1001, and the third convex portion 45 and the fourth concave portion 48 are located on the second side 1002; in two adjacent battery cell groups 10, the fourth convex portion 47 of one battery cell groups is provided on the third concave portion 46 of the other battery cell group 10, the third convex portion 45 of one of the battery cell groups 10 is provided on the fourth concave portion 48 of the other of the battery cell groups 10, where along the first direction F1, the length of the fourth convex portion 47 is greater than the length of the third concave portion 46, the length of the third convex portion 45 is greater than the length of the fourth concave portion 48, and a distance 29 is formed between the two third fixing members 23 by fitting the fourth convex portion 47 with the third concave portion 46 and fitting the third convex portion 45 with the fourth concave portion 48, which is conducive to improving the heat dissipation of the battery cell groups 10.

Optionally, where in the first direction F1, the length of the fourth convex portion 47 is equal to the length of the third concave portion 46, which further improves the stability of connection between two adjacent battery cell groups 10.

In some embodiments, the first fixing member 21 includes a first sleeve 210. In some embodiments, along the first direction F1, the wall thickness of the first sleeve 210 is greater than or equal to 1 mm and less than or equal to 5 mm. Optionally, the wall thickness of the first sleeve 210 is 1 mm, 1.5 mm, 2 mm, 2.5 mm, 3 mm, 3.5 mm, 4 mm, 4.5 mm, 5 mm, etc., which is conducive to improving the protective effect on the electrode terminals.

In some embodiments, the second fixing member 22 includes a second sleeve 220. In some embodiments, along the first direction F1, the wall thickness of the second sleeve 220 is greater than or equal to 1 mm and less than or equal to 5 mm. Optionally, the wall thickness of the second sleeve 220 is 1 mm, 1.5 mm, 2 mm, 2.5 mm, 3 mm, 3.5 mm, 4 mm, 4.5 mm, 5 mm, etc., which is conducive to improving the protective effect on the electrode terminals.

In some embodiments, as shown in FIG. 20, the third fixing member 23 includes a third sleeve 231 and a fourth sleeve 232. In some embodiments, along the first direction F1, the wall thickness of the third sleeve 231 is greater than or equal to 1 mm and less than or equal to 5 mm. Optionally, the wall thickness of the third sleeve 231 is 1 mm, 1.5 mm, 2 mm, 2.5 mm, 3 mm, 3.5 mm, 4 mm, 4.5 mm, 5 mm, etc., which is conducive to improving the protective effect on the electrode terminals. In some embodiments, along the first direction F1, the wall thickness of the fourth sleeve 232 is greater than or equal to 1 mm and less than or equal to 5 mm. Optionally, the wall thickness of the fourth sleeve 232 is 1 mm, 1.5 mm, 2 mm, 2.5 mm, 3 mm, 3.5 mm, 4 mm, 4.5 mm, 5 mm, etc., which is conducive to improving the protective effect on the electrode terminals. Optionally, the wall thickness of the third sleeve 231 along the first direction F1 is represented as T6 shown in FIG. 23. Optionally, the wall thickness of the fourth sleeve 232 along the first direction F1 is represented as T6 shown in FIG. 23.

In some embodiments, the first fixing member 21 is provided on the first side 101 of the battery cell group 10 and at the conductive member 24 by means of an injection molding process or a pouring process, so as to be bonded to at least part of the connection area 25 close to the first side 101 of the battery cell group 10, which improves protection of the connection areas 25 formed on the electrode terminal 12 and the conductive member 24.

In some embodiments, the first fixing member 21 is provided on the first side 101 of the battery cell group 10 and at the conductive member 24 by means of the injection molding process or the pouring process, so as to be bonded to at least part of the connection area 25 close to the first side 101 of the battery cell group 10, the second section 1202 of the electrode terminal 12 and the battery cell housing 11, which improves protection of the connection areas 25 formed on the electrode terminal 12 and the conductive member 24.

In some embodiments, the second fixing member 22 is provided on the second side 102 of the battery cell group 10 and at the conductive member 24 by means of the injection molding process or the pouring process, so as to be bonded to at least part of the connection area 25 close to the second side 102 of the battery cell group 10, which improves protection of the connection areas 25 formed on the electrode terminal 12 and the conductive member 24.

In some embodiments, the second fixing member 22 is provided on the second side 102 of the battery cell group 10 and at the conductive member 24 by means of the injection molding process or the pouring process, so as to be bonded to at least part of the connection area 25 close to the second side 102 of the battery cell group 10, the second section 1202 of the electrode terminal 12 and the battery cell housing 11, which improves protection of the connection areas 25 formed on the electrode terminal 12 and the conductive member 24.

In some embodiments, the third fixing members 22 are arranged on the first side 101 and the second side 102 of the adjacent battery cell groups 10 in the same row by means of the injection molding process or the pouring process, so as to be bonded to at least part of the area connected to the adjacent battery cell groups 10, which improves the structural strength of the first side 101 and the second side 102 of the adjacent battery cell groups 10 and prolongs the service life of the battery cell groups 10.

In some embodiments, the third fixing members 22 are arranged on the first side 101 and the second side 102 of the adjacent battery cell group 10 in the same row by means of the injection molding process or the pouring process, so as to be bonded to the second section 1202 and at least part of the battery cell housing 11, which improves protection of the connection areas 25 formed on the electrode terminal 12 and the conductive member 24.

In some embodiments, through injection molding, an insulating material can be melted by means of an injection molding device, so that the melted insulating material covers the battery cell group 10 and the conductive member 24. After curing of the insulating material, the first fixing member 21 or the second fixing member 22 is formed, so as to be bonded.

In some embodiments, the injection molding process for the first fixing member 21 includes: first, connecting at least one electrode terminal 12 of each of two adjacent battery cell groups 10 along the first direction F1 by means of a conductive member 24, for example, connecting the electrode terminals of the two battery cell groups 10 by welding same to the conductive member 24; then, performing injection molding on the first side 101 of the battery cell group 10 and at the conductive member 24, so as to achieve bonding to the connection area 25 close to the first side 101 of the battery cell group 10, the second section 1202 of the electrode terminal 11 and at least part of the battery cell housing 11; and after curing of the insulating material, forming the first fixing member 21, thereby making the structure of the injection-molded first fixing member 21 more stable, which is conducive to improving the protective effect.

In some embodiments, the injection molding process for the second fixing member 22 includes: first, connecting at least one electrode terminal 12 of each of two adjacent battery cell groups 10 along the first direction F1 by means of the conductive member 24, for example, connecting the electrode terminals of the two battery cell groups 10 by welding same to the conductive member 24; then, performing injection molding on the second side 102 of the battery cell group 10 and at the conductive member 24, so as to achieve bonding to the connection area 25 close to the second side 102 of the battery cell group 10, the second section 1202 of the electrode terminal 11 and at least part of the battery cell housing 11; and after curing of the insulating material, forming the second fixing member 22, thereby making the structure of the injection-molded second fixing member 22 more stable, which is conducive to improving the protective effect.

In some embodiments, through injection molding, an insulating material can be melted by means of an injection molding device, so that the melted insulating material covers the first sides 101 and the second sides 102 of adjacent battery cell groups 10. After curing of the insulating material, the third fixing member 23 is formed, so as to be bonded.

In some embodiments, the injection molding preparation process for the third fixing member 23 includes: first, connecting, for example, by welding, electrode terminals on the first sides 101 and second sides 102 of adjacent battery cell groups 10 in the same row; then, performing injection molding on the first sides 101 and the second sides 102, covering the connection area formed by connecting the electrode terminals with injection materials, after curing of the material, forming the third fixing member 22, the third fixing member 22 covering the connection area formed by connecting the electrode terminals and the part of the electrode terminals located outside the battery cell housing, which is conducive to improving the protective effect.

In some embodiments, through the pouring process, the insulating material (such as the flowable insulating material) can cover the battery cell group 10 and the conductive member 24. After curing of the insulating material, the first fixing member 21 or the second fixing member 22 is formed, so as to be bonded. Optionally, the insulation material includes a potting glue.

In some embodiments, through the pouring process, the insulating material (such as the flowable insulating material) can cover the first sides 101 and the second sides 102 of adjacent battery cell groups 10. After curing of the insulating material, the third fixing member 23 is formed, so as to be bonded. Optionally, the insulation material includes a potting glue.

In some embodiments, the shape and structure of each first fixing member 21 may be the same or different, which is not limited here. The shape and structure of each second fixing member 22 may be the same or different, which is not limited here.

In some embodiments, at least one battery cell group 10 includes a plurality of battery cells 1, and on the first side 101 of the battery cell group 10, at least one electrode terminal 12 of at least one of the plurality of battery cells 1 is bent; and/or at least one battery cell group 10 includes a plurality of battery cells 1, and on the second side 102 of the battery cell group 10, at least one electrode terminal 12 of at least one of the plurality of battery cells 1 is bent.

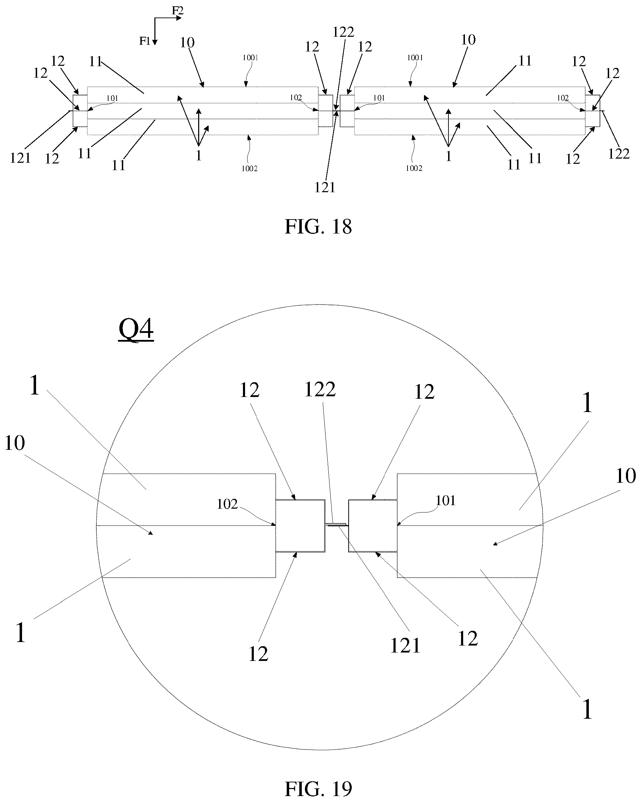

As can be understood with reference to contents related to the electrochemical apparatus 100 provided in the foregoing first aspect, in FIG. 17 showing a case that one battery cell group 10 includes two battery cells 1, where on the first side 101 of the battery cell group 10, at least one electrode terminal 12 of each of two battery cells 1 is bent, and the bent electrode terminals 12 are connected by welding to form a first electrode terminal connecting assembly 121; on the second side 102 of the battery cell group 10, at least one electrode terminal 12 of each of two battery cells 1 is bent, and the bent electrode terminals 12 are connected by welding to form a second electrode terminal connecting assembly 122. In FIG. 18 showing a case that one battery cell group 10 includes three battery cells 1, on the first side 101 of the battery cell group 10, in the three battery cells 1, at least one electrode terminal 12 of two outer battery cells 1 is bent, the electrode terminal 12 of the middle battery cell 1 is not bent, and the electrode terminals 12 of the three battery cells 1 are electrically connected by welding; and on the second side 102 of the battery cell group 10, in the three battery cells 1, at least one electrode terminal 12 of two outer battery cells 1 is bent, the electrode terminal 12 of the middle battery cell 1 is not bent, and the electrode terminals 12 of the three battery cells 1 are electrically connected by welding. It should be understood that this does not serve as any limitations in this application.

In some embodiments of this application, as shown in FIG. 15, the electrochemical apparatus 100 further includes resilient members 5, each resilient member 5 is arranged between two adjacent battery cell groups 10 in the same column of battery cell groups 10, and the resilient member 5 is in contact with at least one of the two battery cell groups 10.

In this embodiment, two adjacent battery cell groups 10 in the same column of battery cell groups 10 refer to two adjacent battery cell groups 10 in the same column of battery cell groups 10 along the first direction F1.

Specifically, it is also noted in this application that when the electrochemical apparatus 100 is in use, the battery cell 1 with flexible packaging may expand due to long-term use. Thus, in the embodiments of this application, the resilient member 5 is arranged between two adjacent battery cell groups 10 in the same column of battery cell groups 10, and the resilient member 5 is in contact with at least one battery cell group 10 in the two battery cell groups 10. When the battery cell 1 of the battery cell group 10 expands, the battery cell group 10 compresses the resilient member 5, such that the resilient member 5 is deformed to support the expanded battery cell 1, gives play to the buffering effect on pressure generated from expansion of the battery cell 1, and alleviates superimposed displacement of the battery cells 1 of the electrochemical apparatus 100 along the first direction F1 due to expansion.

Optionally, the resilient member 5 may be connected to the battery cell group 10 in a bonded form, thereby being in contact with at least one of the two battery cell groups 10. Bonding may be performed by means of glue, a double-sided adhesive tape and other structures, which is not limited here.

In this application, optionally, the resilient member 5 may be arranged between two adjacent battery cell groups 10 in each column of battery cell groups 10.

In some embodiments, the resilient member 5 may include foam. Foam is a material made of foamed plastic particles. Foam has a series of characteristics such as elasticity, a light weight, fast pressure-sensitive fixation, convenience to use, free bending, an ultra-thin volume and reliable performance. For example, types of foam can include PU foam, anti-static foam, conductive foam, EPE foam, anti-static EPE foam, CR foam, EVA foam, bridged PE foam, SBR foam, EPDM foam, etc. The type of foam included by the resilient member 5 is not limited in this application as long as usage requirements can be met.

In some embodiments, the resilient member 5 may include a spring. For example, the resilient member 5 may include a first plate body, a second plate body and a spring, where the spring is connected between the first plate body and the second plate body; the first plate body is connected to one of two adjacent battery cell groups 10 along the first direction F1 in the same column of battery cell groups 10; and the second plate body is connected to the other battery cell group 10 of the two battery cell groups 10. When expanding, the battery cell 1 drives the first plate body and/or the second plate body to move to compress the spring, such that the spring is deformed and supports the expanded battery cell 1, gives play to the buffering effect on pressure generated from expansion of the battery cell 1, and alleviates superimposed displacement of the battery cells 1 of the electrochemical apparatus 100 along the first direction F1 due to expansion.

In some embodiments, in the electrochemical apparatus 100, the thickness of the resilient member that is not compressed by the battery cell is T1, the distance formed in the first direction between two adjacent battery cell groups in the same column of battery cell groups is T2, the thickness of the battery cell that is not subjected to a charge-discharge cycle is T3, and half of the sum of numbers of the battery cells in two adjacent cell groups battery cell groups in the same column of battery cell groups is X, where T1, T2, T3 and X satisfy:

$$T2 - X * T3 * 20\% \leq T1 \leq T2.$$

Specifically, X may be an integer. For example, when the numbers of battery cells 1 of two adjacent battery cell groups 10 along the first direction F1 are respectively 2 and 2, the sum of the two numbers is 4, and thus X = 4/2 = 2; for another example, when the numbers of battery cells 1 of two adjacent battery cell groups 10 in the same column of battery cell groups along the first direction F1 are 2 and 4 respectively, the sum of the two numbers is 6, and thus X = 6/2 = 3; and for still another example, when the numbers of battery cells 1 of two adjacent battery cell groups 10 in the same column of battery cell groups along the first direction F1 are 1 and 1 respectively, the sum of the two numbers is 2, and thus X = 2/2 = 1. Alternatively, X can also be a decimal. For example, when the numbers of battery cells 1 of two adjacent battery cell groups 10 in the same column of battery cell groups along the first direction F1 are respectively 2 and 3, the sum of the two numbers is 5, and thus X = 5/2 = 2.5. Of course, these examples do not serve as limitations in this application. It can be seen that when only one of the numbers of battery cells 1 of two adjacent battery cell groups 10 in the same column of battery call groups the first direction F1 is an odd number, X is a decimal, while in other cases, X is an integer.

Specifically, when T1 = T2 - X * T3 * 20%, in an initial state of the electrochemical apparatus 100, the resilient member 5 can only be in contact with the battery cell 1 of the first battery cell group 10 of two adjacent battery cell groups 10 (denoted as the first battery group 10 and the second battery group 10 respectively) along the first direction F1 in the same column of battery cell groups; when the battery cell 1 of the battery cell group 10 expands to reach 20% of an initial thickness, the resilient member 5 begins to come into contact with the battery cell 1 of the second battery cell group 10; and during subsequent expansion, the resilient member 5 is compressed and supports expansion of the battery cell 1 to avoid excessive expansion of the battery cell 1, thereby reducing the risk of outer packaging (e.g. made of a metal-plastic film) of the battery cell 1 being torn due to expansion, gives play to the buffering effect on pressure generated from expansion of the battery cell 1, and alleviates superimposed displacement of the battery cells 1 of the electrochemical apparatus 100 along the first direction F1 due to expansion, thereby meeting usage requirements of the electrochemical apparatus 100.

When T1 = T2, in the initial state of the electrochemical apparatus 100, the resilient member 5 may be in contact with both two adjacent battery cell groups 10 along the first direction F1 in the same column of battery cell groups; and when the battery cell 1 of the battery cell group 10 expands, the resilient member 5 is compressed and supports the expanded battery cell 1 to avoid excessive expansion of the battery cell 1, thereby reducing the risk of outer packaging (e.g. made of a metal-plastic film) of the battery cell 1 being torn due to expansion, gives play to the buffering effect on pressure generated from expansion of the battery cell 1, and alleviates superimposed displacement of the battery cells 1 of the electrochemical apparatus 100 along the first direction F1 due to expansion, thereby meeting usage requirements of the electrochemical apparatus 100.

Optionally, T1, T2, T3 and X satisfy: $T2 - X * T3 * 15\% \leq T1 \leq T2 - X * T3 * 0.5\%$.

In some embodiments, when $T1 = T2 - X * T3 * 15\%$, in the initial state of the electrochemical apparatus 100, one side of the resilient member 5 is not in contact with the battery cell 1 of the battery cell group 10 along the first direction F1; when the battery cell 1 of the battery cell group 10 expands to reach 15% of the initial thickness, the resilient member 5 may be in contact with the battery cells 1 of the battery cell groups 10 on both sides thereof; and subsequently, the resilient member 5 is compressed and supports expansion of the battery cell 1 to avoid excessive expansion of the battery cell 1, so as to better reduce the risk of outer packaging (e.g. made of a metal-plastic film) of the battery cell 1 being torn due to expansion, give play to the buffering effect on pressure generated from expansion of the battery cell 1, and properly alleviate superimposed displacement of the battery cells 1 of the electrochemical apparatus 100 along the first direction F1 due to expansion, thereby meeting usage requirements of the electrochemical apparatus 100.

In some embodiments, when $T1 = T2 - X * T3 * 0.5\%$, in the initial state of the electrochemical apparatus 100, one side of the resilient member 5 is not in contact with the battery cell 1 of the battery cell group 10 along the first direction F1, which can reduce the cost relative to a case that both sides of the resilient member 5 are in contact with the battery cell 1 (i.e. under the condition of T1 = T2) when the requirements are met, and is more conducive to heat dissipation of the battery cell 1 relative to the case that both sides of the resilient member 5 are in contact with the battery cell 1.

In some embodiments, as shown in FIG. 14 and FIGS. 24 to 25, the electrochemical apparatus 100 further includes a shell 4. The shell 4 includes a first wall surface 401 and a second wall surface 402 which are arranged opposite each other along the first direction F1. Elastic structures such as foam can be provided between the first wall surface 401 and M battery cell groups 10, and elastic structures such as foam can be provided between the second wall surface 402 and M battery cell groups 10, which is not limited here.

In some embodiments, the shell 4 includes a third wall surface 403 and a fourth wall surface 404 which are arranged opposite each other along the third direction F3, and the third direction F3 is perpendicular to the first direction F1 and the second direction F2. At least one of the third wall surface 403 and the fourth wall surface 404 is provided with a fifth convex portion 71, and along the first direction F1, the fifth convex portion 71 is provided between the first fixing member 21 and the second fixing member 22 so as to limit the movement of the battery cell group 10.

In some embodiments, as shown in FIG. 16, the first fixing member 21 is provided with at least one first through hole 61, and the first through hole 61 penetrates the first fixing member 21 along the third direction F3; and/or the second fixing member 22 is provided with at least one first through hole 61, and the first through hole 61 penetrates the second fixing member 22 along the third direction F3, where the third direction F3 is perpendicular to the first direction F1 and the second direction F2, which is conducive to heat dissipation at the electrode terminals 12 bonded to the first fixing member 21 and/or the second fixing member 22.

In some embodiments, the third fixing member 23 is provided with at least one first through hole 61, and the first through hole 61 penetrates the third fixing member 23 along the third direction F3, where the third direction F3 is perpendicular to the first direction F1 and the second direction F2, which is conducive to heat dissipation at the electrode terminals 12 bonded to the third fixing member 23.

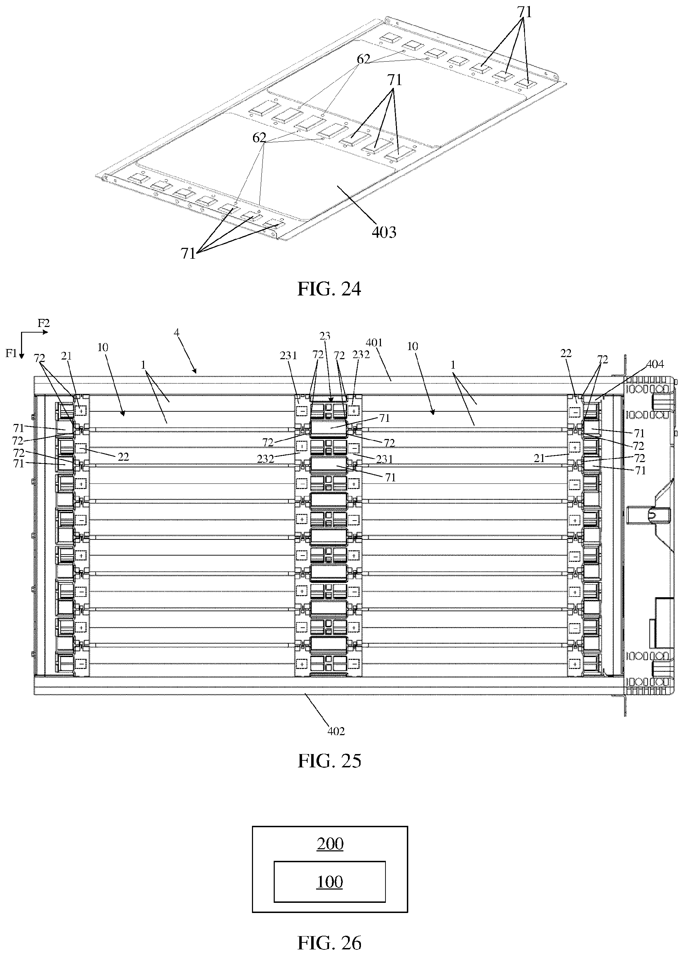

In some optional embodiments, as shown in FIG. 14 and FIG. 24, a second through hole 62 is provided on the third wall surface 403 and/or the fourth wall surface 404, and the second through hole 62 is in communication with the first through hole 61. In this application, by means of such a structure, the heat dissipation effect can be further enhanced.

It can be understood that the contents described above are merely some optional embodiments of the electrochemical apparatus 100 provided in the second aspect of the embodiments of this application, and do not serve as any limitations in the embodiments of this application.

As shown in FIG. 26, according to the third aspect of the embodiments of this application, further provided is an electric device 200, including: the electrochemical apparatus 100 provided in any one of the foregoing first aspect or second aspect.

The electric device 200 in the embodiments of this application includes the electrochemical apparatus 100 provided in the embodiments of this application. Compared with an electrochemical apparatus in the prior art, the electrochemical apparatus 100 has higher safety and stability, and a longer service life. Therefore, the electric device 200 in the embodiments of this application has higher safety and stability, and a longer service life.

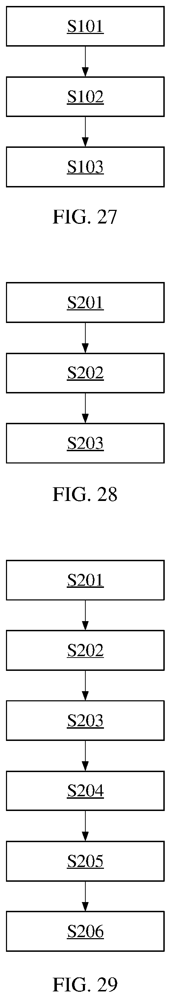

As shown in a flow chart in FIG. 27, a preparation flow chart according to the first aspect of the embodiments of this application includes the following steps:

step S101: connecting electrode terminals 12 of two adjacent battery cell groups 10 of M battery cell groups 10 by means of a conductive member 24, and forming a connection area 25 on the conductive member 24;

step S102: providing a flowable insulating material on first sides 101 of the battery cell groups 10 and at the conductive member 24, and after curing of the insulating material, bonding the connection area 25 close to the first sides 101 of the battery cell groups 10, the part of the electrode terminal 12 located outside the battery cell housing and at least part of the battery cell housing 11 to form a first fixing member 21; and

step S103: providing the flowable insulating material on second sides 102 of the battery cell groups 10 and at the conductive member 24, and after curing of the insulating material, bonding the connection area 25 close to the second sides 102 of the battery cell groups 10, the part of the electrode terminal 12 located outside the battery cell housing and at least part of the battery cell housing 11 to form a second fixing member 22.

In some embodiments, step S102 includes, by means of an injection molding process, melting the insulating material by means of an injection molding device, and after curing of the insulating material, forming the first fixing member 21.

In some embodiments, step S102 includes a pouring process, and by means of the pouring process, the first fixing member 21 can be formed after curing of the flowable insulating material. Optionally, the flowable insulating material includes a potting glue.

In some embodiments, step S103 includes, through an injection molding process, melting the insulating material by means of an injection molding device, and after curing of the insulating material, forming the second fixing member 22.

In some embodiments, step S103 includes a pouring process, and by means of the pouring process, the second fixing member 22 can be formed after curing of the flowable insulating material. Optionally, the flowable insulating material includes a potting glue.

As shown in a flow chart in FIG. 28, a preparation flow chart according to the second aspect of the embodiments of this application includes the following steps:

step S201: connecting electrode terminals 12 of two adjacent battery cell groups 10 in the same row of battery cell groups 10, providing a flowable insulating material on first sides 101 and second sides 102 of the two adjacent battery cell groups 10, and after curing of the insulating material, bonding second sections 1202 of the electrode terminals 12 to at least part of a battery cell housing to form a third fixing member 23;

step S202: providing a flowable insulating material on the first side 101 of a first battery cell group 10 in this row of battery cell groups 10, and after curing of the insulating material, bonding the part of the electrode terminal located outside the battery cell housing and at least part of the battery cell housing to form a first fixing member 21;

step S203: providing the flowable insulating material on a second side 102 of a last battery cell group 10 in this row of battery cell groups 10, and after curing of the insulating material, bonding the part of the electrode terminal located outside the battery cell housing and at least part of the battery cell housing to form a second fixing member 22.

In some embodiments, step S201 includes, by means of an injection molding process, melting the insulating material by means of the injection molding device, and after curing of the insulating material, forming a third fixing member 23.

In some embodiments, step S201 includes a pouring process, and by means of the pouring process, the third fixing member 23 can be formed after curing of the flowable insulating material. Optionally, the flowable insulating material includes a potting glue.

In some embodiments, step S202 includes, by means of an injection molding process, melting the insulating material by means of the injection molding device, and after curing of the insulating material, forming the first fixing member 21.

In some embodiments, step S202 includes a pouring process, and by means of the pouring process, the first fixing member 21 can be formed after curing of the flowable insulating material. Optionally, the flowable insulating material includes a potting glue.

In some embodiments, step S203 includes, by means of an injection molding process, melting the insulating material by means of an injection molding device, and after curing of the insulating material, forming the second fixing member 22.

In some embodiments, step S203 includes a pouring process, and the second fixing member 22 can be formed by means of the pouring process after curing of the flowable insulating material. Optionally, the flowable insulating material includes a potting glue.

As shown in a flow chart in FIG. 29, a preparation flow chart according to the second aspect of the embodiments of this application further includes the following steps:

step S204: providing M-1 conductive members, in two adjacent rows of battery cell groups, connecting an electrode terminal on a first side of a first battery cell group in one row of battery cell groups to an electrode terminal on a second side of the first battery cell group in the other row of battery cell groups by means of a conductive member, and forming a connection area on the conductive member 25;

step S205: providing a flowable insulating material on the first side of the battery cell group and at the conductive member, and after curing of the insulating material, bonding the connection area 25 close to the first side of the battery cell group; and

step S206: providing the flowable insulating material on the second side of the battery cell group and at the conductive member, and after curing of the insulating material, bonding the connection area 25 close to the second side of the battery cell group.

In some embodiments, step S205 includes, by means of an injection molding process, melting the insulating material by means of an injection molding device, and bonding the insulating material to the connection area after curing.

In some embodiments, step S205 includes a pouring process, and by means of the pouring process, the flowable insulating material can bonded to the connection area after curing. Optionally, the flowable insulating material includes a potting glue.

In some embodiments, step S206 includes, by means of an injection molding process, melting the insulating material by means of an injection molding device, and bonding the insulating material to the connection area after curing.

In some embodiments, step S206 includes a pouring process, and by means of the pouring process, the flowable insulating material can be bonded to the connection area after curing. Optionally, the flowable insulating material includes a potting glue.

The terms "including" and deformations thereof used here are open-ended including, namely "including but not limited to". The term "based on" is "at least in part based on". The term "one embodiment" represents "at least one embodiment"; the term "another embodiment" represents "at least one another embodiment"; and the term "some embodiments" represents "at least some embodiments". It should be noted that the concepts such as "first" and "second" mentioned in this application are used only for distinguishing different apparatuses, modules or units, other than limiting the sequence or interdependence relationship of functions executed by these apparatuses, modules or units. It should be noted that modifiers such as "one" and "a plurality of" mentioned in this application are exemplary rather than restrictive, and a person skilled in the art should understand that unless otherwise explicitly specified in the context, the modifiers should be understood as "one or a plurality of".

A person skilled in the art would have readily conceive of other implementation solutions of this application after considering the description and practicing the invention applied here. This application aims to cover any modifications, uses or adaptive changes of this application, these modifications, uses or adaptive changes follow the general principles of this application and include common general knowledge or customary technical means which are not applied in this application in the art. The description and the embodiments are only considered to be exemplary, and the true scope and spirit of this application are defined by the attached claims.

Finally, it should be noted that: the above embodiments are only for describing the technical solutions of the embodiments of this application, other than limiting same; although this application is described in detail with reference to the forgoing embodiments, a person skilled in the art should understand that they can still modify the technical solutions recited in the forgoing embodiments, or perform equivalent substitutions on some of the technical features therein; and these modifications or substitutions do not make the essence of the corresponding technical solutions depart from the spirit and scope of the technical solutions of the embodiments of this application.

**Claims**

1. An electrochemical apparatus, comprising:

N battery cells, M first fixing members, M second fixing members and M-1 conductive members, wherein N and M are both positive integers and 2 $\leq$ M $\leq$ N;

the N battery cells are divided into M battery cell groups, each battery cell group comprises at least one battery cell, the battery cells in the battery cell groups are arranged in a first direction, and the M battery cell groups are arranged in the first direction;

each battery cell comprises a battery cell housing and two electrode terminals, and the two electrode terminals are arranged opposite to each other on two sides of the battery cell housing in a second direction, wherein the second direction is the direction in which the first fixing members and the second fixing members are arranged opposite to each other, and the second direction is perpendicular to the first direction;

in the first direction, the electrode terminals of two adjacent battery cell groups are connected by means of a conductive member, and connection areas are formed on the conductive member;

in the second direction, each battery cell group comprises a first side and a second side which are arranged opposite to each other, wherein the first fixing member is bonded to at least part of the electrode terminal on the first side of the battery cell group, and at least one first fixing member is bonded to at least part of the connection areas;

and/or the second fixing member is bonded to at least part of the electrode terminal on the second side of the battery cell group, and at least one second fixing member is bonded to at least part of the connection areas.

2. The electrochemical apparatus according to claim 1, wherein

at least one battery cell group comprises a plurality of battery cells, and on the first side of the battery cell group, the electrode terminals of each of the plurality of battery cells are connected to each other; and/or, at least one battery cell group comprises a plurality of battery cells, and on the second side of the battery cell group, the electrode terminals of each of the plurality of battery cells are connected to each other.

3. The electrochemical apparatus according to claim 1, wherein in two adjacent battery cell groups, the first fixing member of one of the battery cell groups is connected to the second fixing member of the other of the battery cell groups, and a distance is formed between the first fixing member and the second fixing member in the first direction.

4. The electrochemical apparatus according to claim 3, wherein in the first direction, one of the first fixing member and the second fixing member is provided with a convex portion, and a distance is formed between the first fixing member and the second fixing member by means of the convex portion.

5. The electrochemical apparatus according to claim 4, wherein in the first direction, the other of the first fixing member and the second fixing member is provided with a concave portion, the length of the convex portion in the first direction is greater than the length of the concave portion in the first direction, and a distance is formed between the first fixing member and the second fixing member by fitting the convex portion with the concave portion.

6. The electrochemical apparatus according to claim 1, wherein

the battery cell further comprises an electrode assembly, the electrode assembly is arranged in the battery cell housing, and the two electrode terminals are connected to the electrode assembly and extend out of the battery cell housing; in the same battery cell group, in the first direction, a projection of the first fixing member is apart from a projection of the electrode assembly of the battery cell in the battery cell group; and/or in the same battery cell group, in the first direction, a projection of the second fixing member is apart from a projection of the electrode assembly of the battery cell in the battery cell group.

7. The electrochemical apparatus according to claim 1, wherein

at least one of the first fixing members is formed on the first side of the battery cell group and at least part of the connection areas by means of an injection molding process; and/or at least one of the second fixing members is formed on the second side of the battery cell group and at least part of the connection areas by means of the injection molding process.

8. The electrochemical apparatus according to claim 7, wherein the first fixing member covers the part of the electrode terminal located outside the battery cell housing and at least part of the battery cell housing; and/or the second fixing member covers the part of the electrode terminal located outside the battery cell housing and at least part of the battery cell housing.

9. The electrochemical apparatus according to claim 1, wherein

the first fixing member is provided with at least one first through hole, and the first through hole penetrates the first fixing member in a third direction; and/or the second fixing member is provided with at least one first through hole, and the first through hole penetrates the second fixing member in the third direction, wherein the third direction is perpendicular to the first direction and the second direction.

10. The electrochemical apparatus according to claim 9, wherein

the electrochemical apparatus further comprises a shell; the shell comprises a third wall surface and a fourth wall surface which are arranged opposite to each other in the third direction; and a second through hole is provided on the third wall surface and/or the fourth wall surface, and the second through hole is in communication with the first through hole.

11. An electrochemical apparatus, comprising

N battery cells, A first fixing members, A second fixing members and (L - 1) * A third fixing members, wherein N, M and L are all positive integers and $2 \leq M \leq N$ and $L \geq 2$; and the N battery cells are divided into M battery cell groups, the M battery cell groups are divided into A rows and L columns, and in the second direction, each battery cell group comprises a first side and a second side which are arranged opposite to each other; each of the battery cell groups comprises at least one battery cell, the battery cells in the battery cell groups are arranged in the first direction, and the second direction is perpendicular to the first direction; the battery cell comprises a battery cell housing and two electrode terminals, and the two electrode terminals are arranged opposite to each other on two sides of the battery cell housing in the second direction, wherein in a row of battery cell groups, the first fixing member is located on the first side of a first battery cell group in this row of battery cell groups, and is bonded to at least part of the electrode terminal on the first side of the first battery cell group; the second fixing member is located on the second side of a last battery cell group in this row of battery cell groups, and is bonded to at least part of the electrode terminal on the second side of the last battery cell group; and in a row of battery cell groups, the electrode terminals of two adjacent battery cell groups are connected, the third fixing member is connected to two adjacent battery cell groups, respectively, the third fixing member is bonded to at least part of the electrode terminal on the second side of one of the two adjacent battery cell groups, and the third fixing member is bonded to at least part of the electrode terminal on the first side of the other of the two adjacent battery cell groups.

12. The electrochemical apparatus according to claim 11, wherein

the A rows of battery cell groups are sequentially stacked in the first direction; the electrochemical apparatus further comprises A-1 conductive members; in two adjacent rows of battery cell groups, the electrode terminal on the first side of the first battery cell group in one row of battery cell groups is connected to the electrode terminal on the second side of the first battery cell group in the other row of battery cell groups by means of the conductive member, connection areas are formed on the conductive member, at least one of the first fixing members is bonded to at least part of the connection areas, and/or at least one of the second fixing members is bonded to at least part of the connection areas.

13. The electrochemical apparatus according to claim 12, wherein

at least one of the first fixing members is formed on the first side of the first battery cell group in the row of battery cell groups and at least part of the connection areas by means of an injection molding process; and/or at least one of the second fixing members is formed on the second side of the last battery cell group in the row of battery cell groups and at least part of the connection areas by means of the injection molding process; and/or in two adjacent battery cell groups in the row of battery cell groups, at least one of the third fixing members is formed on the second side of one battery cell group and the first side of the other battery cell group by means of the injection molding process.

14. The electrochemical apparatus according to claim 13, wherein

the first fixing member covers the part of the electrode terminal located outside the battery cell housing and at least part of the battery cell housing; and/or the second fixing member covers the part of the electrode terminal located outside the battery cell housing and at least part of the battery cell housing; and/or the third fixing member covers the part of the electrode terminal located outside the battery cell housing and at least part of the battery cell housing.

15. The electrochemical apparatus according to claim 11-13, wherein

the first fixing member is provided with at least one first through hole, and the first through hole penetrates the first fixing member in a third direction; and/or the second fixing member is provided with at least one first through hole, and the first through hole penetrates the second fixing member in the third direction; and/or the third fixing member is provided with at least one first through hole, and the first through hole penetrates the third fixing member in the third direction, wherein the third direction is perpendicular to the first direction and the second direction.

16. The electrochemical apparatus according to claim 15, wherein

in the first direction, in two adjacent battery cell groups, the first fixing member of one of the battery cell groups is connected to the second fixing member of the other of the battery cell groups, and a distance is formed between the first fixing member and the second fixing member in the first direction;

and/or,

in the first direction, in two adjacent battery cell groups, the third fixing member of one of the battery cell groups is connected to the third fixing member of the other of the battery cell groups, and a distance is formed between the two third fixing members in the first direction.

17. The electrochemical apparatus according to claim 15, wherein

the battery cell further comprises an electrode assembly, the electrode assembly is arranged in the battery cell housing, and the two electrode terminals are connected to the electrode assembly and extend out of the battery cell housing;

in the same battery cell group, in the first direction, a projection of the first fixing member is apart from a projection of the electrode assembly of the battery cell in the battery cell group; and/or

in the same battery cell group, in the first direction, a projection of the second fixing member is apart from the projection of the electrode assembly of the battery cell in the battery cell group; and/or

in the same row of battery cell groups, in the first direction, a projection of the third fixing member between two adjacent battery cell groups is apart from projections of the electrode assemblies of the battery cells in the two battery cell groups.

18. The electrochemical apparatus according to claim 15, wherein

the electrochemical apparatus further comprises a shell, and the shell comprises a third wall surface and a fourth wall surface which are arranged opposite to each other in the third direction; and

a second through hole is provided on the third wall surface and/or the fourth wall surface, and the second through hole is in communication with the first through hole.

19. An electric device, comprising the electrochemical apparatus according to any one of claims 1-18.

20. A manufacturing method for the electrochemical apparatus according to any one of claims 1 to 10, wherein the method comprises:

step S101: connecting electrode terminals of two adjacent battery cell groups of M battery cell groups by means of a conductive member, and forming connection areas on the conductive member;

step S102: providing a flowable insulating material on a first side of the battery cell group and at the conductive member, and after curing of the insulating material, bonding the connection areas close to the first side of the battery cell group, the part of the electrode terminal located outside the battery cell housing and at least part of the battery cell housing to form a first fixing member; and

step S103: providing the flowable insulating material on a second side of the battery cell group and at the conductive member, and after curing of the insulating material, bonding the connection areas close to the second side of the battery cell group, the part of the electrode terminal located outside the battery cell housing and at least part of the battery cell housing to form a second fixing member.

21. A manufacturing method for the electrochemical apparatus according to any one of claims 11 to 18, wherein the method comprises:

step S201: connecting electrode terminals of two adjacent battery cell groups in the same row of battery cell groups, providing a flowable insulating material on first sides and second sides of the two adjacent battery cell groups, and after curing of the insulating material, bonding the part of the electrode terminal located outside the battery cell housing and at least part of the battery cell housing to form a third fixing member;

step S202: providing a flowable insulating material on the first side of a first battery cell group in this row of battery cell groups, and after curing of the insulating material, bonding the part of the electrode terminal located outside the battery cell housing and at least part of the battery cell housing to form a first fixing member; and

step S203: providing the flowable insulating material on a second side of a last battery cell group in this row of battery cell groups, and after curing of the insulating material, bonding the part of the electrode terminal located outside the battery cell housing and at least part of the battery cell housing to form a second fixing member.

22. The method according to claim 21, wherein the method further comprises:

step S204: providing M-1 conductive members, in two adjacent rows of battery cell groups, connecting the electrode terminal on the first side of the first battery cell group in one row of battery cell groups to the electrode terminal on the second side of the first battery cell group in the other row of battery cell groups by means of a conductive member, and forming connection areas on the conductive member;

step S205: providing the flowable insulating material on the first side of the battery cell group and at the conductive member, and after curing of the insulating material, bonding the connection areas close to the first side of the battery cell group; and

step S206: providing the flowable insulating material on the second side of the battery cell group and at the conductive member, and after curing of the insulating material, bonding the connection areas close to the second side of the battery cell group.

FIG. 1

FIG. 2

FIG. 3

FIG. 4

FIG. 5

FIG. 6

FIG. 7

FIG. 8

FIG. 9

FIG. 10

FIG. 11

FIG. 12

FIG. 13

FIG. 14

FIG. 15

FIG. 16

FIG. 17

FIG. 18

FIG. 19

FIG. 20

FIG. 21

FIG. 22

FIG. 23

FIG. 24

FIG. 25

FIG. 26

S101

↓

S102

↓

S103

FIG. 27

S201

↓

S202

↓

S203

FIG. 28

S201

↓

S202

↓

S203

↓

S204

↓

S205

↓

S206

FIG. 29

## INTERNATIONAL SEARCH REPORT

| International application No. |
| --- |
| **PCT/CN2022/130553** |

**A.    CLASSIFICATION OF SUBJECT MATTER**

H01M 8/02(2016.01)i

According to International Patent Classification (IPC) or to both national classification and IPC

**B.    FIELDS SEARCHED**

Minimum documentation searched (classification system followed by classification symbols)

IPC: H01M

Documentation searched other than minimum documentation to the extent that such documents are included in the fields searched

Electronic data base consulted during the international search (name of data base and, where practicable, search terms used)

CNTXT, ENTXTC, CNKI, DWPI, VEN: 厦门新能达科技有限公司, 电化学, 电池, 电极, 端子, 极耳, 连接, 粘接, 黏结, 重叠, 导电, 保护, electrochemistry, electrode?, bind+, connect+, contact+, overlap+, cell, stack, battery, conduct+, electrical, terminal, protect+

**C.    DOCUMENTS CONSIDERED TO BE RELEVANT**

| Category* | Citation of document, with indication, where appropriate, of the relevant passages | Relevant to claim No. |
| --- | --- | --- |
| A | CN 113904055 A (POWERAMP TECHNOLOGY LIMITED) 07 January 2022 (2022-01-07) description, paragraphs [0008]-[0009] and [0182]-[0189], and figures 1-16 | 1-22 |
| A | CN 113193282 A (POWERAMP TECHNOLOGY LIMITED) 30 July 2021 (2021-07-30) entire document | 1-22 |
| A | CN 213752868 U (POWERAMP TECHNOLOGY LIMITED) 20 July 2021 (2021-07-20) entire document | 1-22 |
| A | CN 214123999 U (POWERAMP TECHNOLOGY LIMITED) 03 September 2021 (2021-09-03) entire document | 1-22 |
| A | CN 214254670 U (POWERAMP TECHNOLOGY LIMITED) 21 September 2021 (2021-09-21) entire document | 1-22 |
| A | CN 215377612 U (POWERAMP TECHNOLOGY LIMITED) 31 December 2021 (2021-12-31) entire document | 1-22 |

☑ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **12 July 2023** | **24 July 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

International application No.

**PCT/CN2022/130553**

### C. DOCUMENTS CONSIDERED TO BE RELEVANT

| Category* | Citation of document, with indication, where appropriate, of the relevant passages | Relevant to claim No. |
|---|---|---|
| A | CN 217361781 U (POWERAMP TECHNOLOGY LIMITED) 02 September 2022 (2022-09-02) entire document | 1-22 |
| A | JP 2022017722 A (SOFC TECHNOLOGY CO., LTD.) 26 January 2022 (2022-01-26) entire document | 1-22 |

Form PCT/ISA/210 (second sheet) (July 2022)

## INTERNATIONAL SEARCH REPORT
### Information on patent family members

International application No.

**PCT/CN2022/130553**

| Patent document cited in search report | | | Publication date (day/month/year) | Patent family member(s) | Publication date (day/month/year) |
|---|---|---|---|---|---|
| CN | 113904055 | A | 07 January 2022 | None | |
| CN | 113193282 | A | 30 July 2021 | None | |
| CN | 213752868 | U | 20 July 2021 | None | |
| CN | 214123999 | U | 03 September 2021 | None | |
| CN | 214254670 | U | 21 September 2021 | None | |
| CN | 215377612 | U | 31 December 2021 | None | |
| CN | 217361781 | U | 02 September 2022 | None | |
| JP | 2022017722 | A | 26 January 2022 | JP      7210508    B2 | 23 January 2023 |

Form PCT/ISA/210 (patent family annex) (July 2022)